# EUROPEAN PATENT SPECIFICATION

(11) **EP 4 404 489 B1**
(45) Date of publication and mention of the grant of the patent: **14.10.2026**
(21) Application number: 21961904.6
(22) Date of filing: 29.10.2021
(51) Int. Cl.: H04L 5/00, H04L 1/16, H04L 1/18, H04L 1/1829

(54) **PSFCH RESOURCE DETERMINATION IN WIRELESS SIDELINK COMMUNICATION**
BESTIMMUNG VON PSFCH-RESSOURCEN IN EINER DRAHTLOSEN SIDELINK-KOMMUNIKATION
DÉTERMINATION DE RESSOURCES PSFCH DANS UNE COMMUNICATION SANS FIL EN LIAISON LATÉRALE

(43) Date of publication of application: 24.07.2024
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); ZHANG, Shichang, Dongguan, Guangdong 523860 (CN); MA, Teng, Dongguan, Guangdong 523860 (CN); LIN, Huei-Ming, Taipei Taiwan 111 (CN)
(74) Representative: Wu, Ting
(86) International application number: PCT/CN2021/127533
(87) International publication number: WO 2023/070547

(56) References cited:
- WO-A1-2020/251237
- WO-A1-2021/189428
- WO-A1-2021/189428
- CN-A- 111 541 526
- CN-A- 111 865 504
- HUAWEI, HISILICON: "Sidelink physical layer procedures for NR V2X", 3GPP DRAFT; R1-1906008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 3 May 2019 (2019-05-03), Mobile Competence Centre ; 650, route des Lucioles ; F-06921 Sophia-Antipolis Cedex ; France , pages 1 - 23, XP051708050

## Description

### TECHNICAL FIELD

The embodiments of the present disclosure relate to the field of communication, and more particularly to a wireless communication method, a first terminal device and a second terminal device.

### BACKGROUND

In the existing new radio (NR) sidelink (SL) transmission, the physical sidelink feedback channel (PSFCH) occupies a resource block (RB) in frequency domain, and the physical sidelink shared channel (PSSCH) has a one-to-one correspondence with the PSFCH transmission resource. That is, the receiving terminal can determine one PSFCH transmission resource for each PSSCH, and execute side feedback on the PSFCH transmission resource.

However, for the transmission technology of sidelink, such as device to device (D2D) or vehicle to everything (V2X), when the terminal device works in the unlicensed spectrum, the resource granularity of the sidelink system can be based on an interlaced resource block (IRB) in order to meet the regulatory requirements of the unlicensed spectrum.

However, there is no solution about how to design PSFCH transmission resources based on the IRB yet in this field.

Related technologies are known from WO2021/189428A1.

### SUMMARY

Eembodiments of the present disclosure provide a wireless communication method, a first terminal device and a second terminal device. By specifying the IRB for transmitting the PSFCH, not only the system performance can be improved, but also the resource utilization rate can be improved.

A first aspect of the present disclosure provides a wireless communication method as set out in claim 1. Additional features are set out in claims 2 to 8.

A second aspect of the present disclosure provides a wireless communication method as set out in claim 9. Additional features are set out in claims 10 to 13.

A third aspect of the present disclosure provides a first terminal device as set out in claim 14.

In an implementation, the first terminal device may include a processing unit for executing information processing functions. For example, the processing unit may be a processor.

In an implementation, the first terminal device may include a transmitting unit and/or a receiving unit. The transmitting unit is configured for executing transmission functions, and the receiving unit is configured for executing reception functions. For example, the transmitting unit may be a transmitter or a sender, and the receiving unit may be a receiver. For another example, the first terminal device is a communication chip, the transmitting unit can be an input circuit or an interface of the communication chip, and the transmitting unit can be an output circuit or an interface of the communication chip.

In a fourth aspect, the present disclosure provides a second terminal device as set out in claim 15.

In an implementation, the second terminal device may include a processing unit for executing information processing functions. For example, the processing unit may be a processor.

In an implementation, the second terminal device may include a transmitting unit and/or a receiving unit. The transmitting unit is configured for executing transmission functions, and the receiving unit is configured for executing reception functions. For example the transmitting unit may be a transmitter or a sender and the receiving unit may be a receiver or an acceptor. For another example, the second terminal device is a communication chip, the receiving unit can be an input circuit or interface of the communication chip, and the transmitting unit can be an output circuit or interface of the communication chip.

An aspect of the present disclosure provides a chip for implementing the method in any of the first to second aspects or implementations thereof. In particular, the chip includes a processor for invoking and running a computer program from a memory to enable a device on which the chip is mounted to execute the method according to any of the first to second aspects or implementations thereof.

An aspect of the present disclosure provides a computer-readable storage medium for storing a computer program that enables a computer to execute the method according to any of the first to second aspects or implementations thereof.

An aspect of the present disclosure provides a computer program product including computer program instructions that enable a computer to execute the method according to any of the first to second aspects or implementations thereof.

An aspect of the present disclosure provides a computer program that, when run on a computer, enables the computer to execute the method of any of the first to second aspects or implementations thereof.

Based on the above technical solution, the transmission resource of the first PSFCH corresponding to the first PSSCH is designed to be located in the at least one second IRB determined according to the at least one first IRB, and the at least one second IRB is designed to be an IRB determined in the PSFCH transmission resource set included in the first slot including the PSFCH transmission resource. On the one hand, the first terminal device can implement the transmission of the first PSFCH based on the IRB, which improves the system performance. On the other hand, the PSFCHs corresponding to the PSSCH in different slots can be multiplexed and transmitted in the same slot in the same way, which improves the resource utilization rate.

### BRIEF DESCRIPTION OF THE DRAWINGS

Figs. 1 to 7 show examples of scenarios provided by the present disclosure.
Fig. 8 is a schematic diagram of sidelink feedback provided by the present disclosure.
Fig. 9 is a schematic diagram of of a slot structure of a PSFCH and a PSCCH/PSSCH provided by the present disclosure.
Fig. 10 is a schematic diagram of resources of a side feedback channel provided by the present disclosure.
Fig. 11 shows an example of IRB-based transmission resources provided by an embodiment of the present disclosure.
Figs. 12 and 13 are schematic diagrams of an IRB-based frame structure provided by an embodiment of the present disclosure.
Fig. 14 is a schematic flow chart of a wireless communication method provided by an embodiment of the present disclosure.
Fig. 15 shows an example of a one-to-one correspondence between an IRB in a PSSCH resource pool and an IRB in a PSFCH slot provided by an embodiment of the present disclosure.
Fig. 16 shows an example of a many-to-one correspondence between an IRB in a PSSCH resource pool and an IRB in a PSFCH slot provided by an embodiment of the present disclosure.
Fig. 17 shows an example of a one-to-many correspondence between an IRB in a PSSCH resource pool and an IRB in a PSFCH slot provided by an embodiment of the present disclosure.
Fig. 18 shows an example of a first transmission resource subset available for transmitting a PSFCH provided by an embodiment of the present disclosure.
Fig. 19 is another schematic flow chart of a wireless communication method provided by an embodiment of the present disclosure.
Fig. 20 is a schematic block diagram of a first terminal device provided by an embodiment of the present disclosure.
Fig. 21 is a schematic block diagram of a second terminal device provided by an embodiment of the present disclosure.
Fig. 22 is a schematic block diagram of a communication device provided by an embodiment of the present disclosure.
Fig. 23 is a schematic block diagram of a chip provided by an embodiment of the present disclosure.

### DETAILED DESCRIPTION

The technical solution in the embodiment of the present disclosure is described with reference to the accompanying drawings.

Embodiments of the present disclosure can be applied to any terminal-to-terminal communication framework, for example, vehicle to vehicle (V2V), vehicle to everything (V2X), device to device (D2D), and so on. The terminal device of the present disclosure can be any device or equipment configured with a physical layer and a media access control layer, and the terminal device can also be referred to as an access terminal. For example, a user equipment (UE), a user unit, a user station, a mobile station, a mobile stage, a remote station, a remote terminal, a mobile device, a user terminal, a terminal, a wireless communication device, a user agent or a user apparatus. The access terminal may be a cellular telephone, a cordless telephone, a session initiation protocol (SIP) telephone, a wireless local loop (WLL) station, a personal digital assistant (PDA), a handheld device having a wireless communication function, a computing device or other linear processing device connected to a wireless modem, a vehicle-mounted device, a wearable device, and the like. The embodiment of the present disclosure is described by taking the vehicle terminal as an example, but is not limited thereto.

The technical solution of the embodiment of the present disclosure can be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE) system, a new radio (NR) system, evolution system of NR system, an LTE-based access to unlicensed spectrum (LTE-U) system, a NR-based access to unlicensed spectrum (NR-U) system, a non-terrestrial networks (NTN) system, a universal mobile telecommunications system (UMTS), a wireless local area network (WLAN), a wireless fidelity (WiFi), a 5th-Generation (5G) system or other communication systems.

In general, traditional communication systems support a limited number of connections and are easy to implement. However, with the development of communication technology, a mobile communication system not only supports traditional communication, but also supports, for example, a device to device (D2D) communication, a machine to machine (M2M) communication, a machine type communication (MTC), a vehicle to vehicle (V2V) communication, or a vehicle to everything (V2X) communication, etc. Embodiments of the present disclosure can also be applied to these communication systems.

Optionally, the communication system of the present disclosure can be applied to a carrier aggregation (CA) scenario, a dual connectivity (DC) scenario, and a standalone (SA) network deployment scenario.

Optionally, the communication system of the present disclosure may be applied to an unlicensed spectrum. The unlicensed spectrum may also be considered as a shared spectrum. Alternatively, the communication system of the present disclosure may also be applied to a licensed spectrum, and the licensed spectrum may also be considered as an unshared spectrum.

The embodiments of the present disclosure are described in connection with a network device and a terminal device. The terminal device may also be referred to as a user equipment (UE), an access terminal, a user unit, a user station, a mobile station, a mobile stage, a remote station, a remote terminal, a mobile device, a user terminal, a terminal, a wireless communication device, a user agent or a user equipment, etc.

The terminal device may be a STATION (ST) in a WLAN, a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN) network, etc.

In the present disclosure, the terminal device may be deployed on land including indoors or outdoors, or may be hand-held, wearable or vehicle-mounted. The terminal device can also be deployed on the water (such as ships, etc.). The terminal device can also be deployed in the air (such as airplanes, balloons and satellites, etc).

In the present disclosure, the terminal device may be a mobile phone , a pad, a computer having a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home.

By way of example and not limitation, the terminal device may also be a wearable device in the present disclosure. The wearable devices may also be called wearable intelligent devices, which are the general name of wearable devices developed by applying wearable technology to intelligently design daily wearing, such as glasses, gloves, watches, clothing and shoes. The wearable devices are portable devices that is worn directly on the body or integrated into the user's clothes or accessories. The wearable device is not merely a kind of hardware device, but can realize powerful functions through software support, data interaction and cloud interaction. Generalized wearable smart devices include smart watches or smart glasses which have full functions, large size and can realize complete or partial functions without relying on smart phones, and also include various smart bracelets and smart jewelries for monitoring physical signs which only focus on certain application functions, and is used in conjunction with other devices such as smart phones.

In the present disclosure, the network device may be a device for communicating with a mobile device, the network device may be an access point (AP) in a WLAN, a base transceiver station (BTS) in a GSM or CDMA, a NodeB (NB) in a WCDMA, an evolutional Node B (eNB or eNodeB) in a LTE, or a relay station or an access point, or a vehicle-mounted device, a wearable device, a network device or a gNB in an NR network, a network device in a future evolved PLMN network or a network device in an NTN network, etc.

By way of example and not limitation, the network device may be mobile, for example the network device may be a mobile device in the present disclosure. Optionally, the network device can be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite and the like. Optionally, the network device can also be a base station arranged on land, water and the like.

In the present disclosure, the network device can provide services for a cell, and the terminal device communicates with the network device through the transmission resources (e.g. frequency domain resources, or spectrum resources) used by the cell. The cell can be a cell corresponding to the network device (e.g. base station), and the cell can belong to a macro eNodeB or a base station corresponding to a small cell. The small cell can include a metro cell, a micro cell, a pico cell, a femto cell, etc. The small cells have the characteristics of small coverage and low transmission power, and are suitable for providing high-speed data transmission services.

It should be understood that the terms "system" and "network" are often used interchangeably herein. In this context, the term "and/or" merely indicates an association relationship that associated objects, indicating that there can be three relationships, for example, A and/or B can mean that only A, and both A and B, and only B. In addition, the character "/" in the present disclosure generally indicates that the related objects have a "or" relationship.

Terms used in the embodiments of the present disclosure are used only for explaining specific embodiments of the present disclosure, rather than limiting the present disclosure. The terms "first", "second", "third", "fourth" and the like in the specification, the claims and the accompanying drawings of the present disclosure are used to distinguish different objects rather than defining a particular order. Furthermore, the terms "include" and "have" and any variations thereof are intended to cover non-exclusive inclusion.

It should be understood that the terms "indication" in the description embodiments of the present disclosure may represent a direct indication, an indirect indication, or an association. For example, an expression that A indicates B can mean that A directly indicates B, for example, B can be obtained through A, or can also mean that A indirectly indicates B, for example, A indicates C, and B can be obtained by C, or can also indicate that there is an association between A and B.

In the description of embodiments of the present disclosure, the term "correspondence" may represent a direct correspondence or an indirect correspondence relationship, or may represent an association relationship, or may also represent a relationship between indication and being indicated, configuration and being configured, etc.

In the present disclosure, the term "predefine" may be achieved by pre-storing corresponding codes, tables or other means used to indicate relevant information in a device (including for example a terminal device and a network device), and the specific implementation is not limited in the present disclosure. For example, the term "predefine" may indicate defining in the protocol.

In the present disclosure, the "protocol" may refer to a standard protocol in the communication field, for example, may include an LTE protocol, a NR protocol and a related protocols applied in future communication systems, which are not limited in the present disclosure.

The sidelink communication can be divided into sidelink communication within network coverage, sidelink communication partially within the network coverage and sidelink communication outside the network coverage according to the network coverage of the communication terminal.

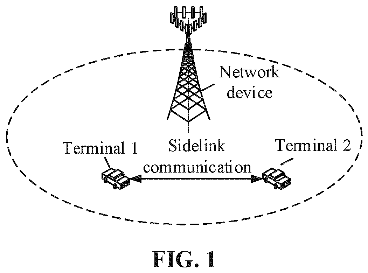

Figs. 1 to 5 show a system framework of a vehicle to vehicle provided by the present disclosure.

As shown in Fig. 1, in the sidelink communication within the network coverage, all terminals (including terminal 1 and terminal 2) executing sidelink communication are within the coverage range of the network device. Therefore, all terminals can receive configuration signaling of the network device, and execute sidelink communication based on the same sidelink configuration.

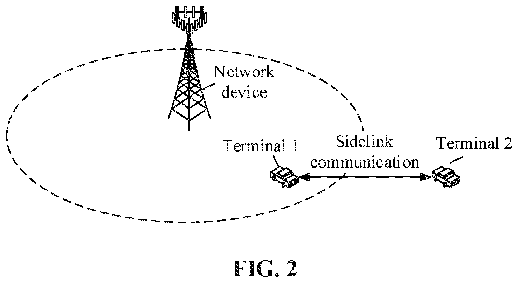

As shown in Fig. 2, in the sidelink communication partially within the network coverage, a part of the terminal executing the sidelink communication is within the coverage of the network device, and the part of the terminal (i.e. terminal 1) can receive the configuration signaling of the network device and execute sidelink communication according to the configuration of the network device. The terminal (i.e. terminal 2) outside the network coverage cannot receive the configuration signaling of the network device. In this case, the terminal outside the network coverage determines the sidelink configuration according to pre-configuration information and information carried in the sidelink broadcast channel (PSBCH) sent by the terminal within the network coverage, and executes sidelink communication.

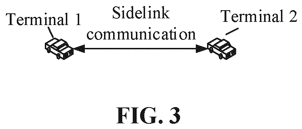

As shown in Fig. 3, in the sidelink communication outside the network coverage, all terminals (including terminal 1 and terminal 2) executing sidelink communication are outside the network coverage, and all terminals execute sidelink communication according to the sidelink configuration determined by the pre-configuration information.

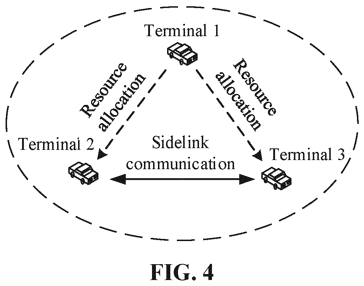

As shown in Fig. 4, for the sidelink communication having a central control node, a plurality of terminals (including terminal 1, terminal 2 and terminal 3) constitute a communication group. The communication group has a central control node and can also become a cluster header (CH). The central control node has one of the following functions: being responsible for establishing a communication group, joining and leaving of group members; executing resource coordination, allocating sidelink transmission resources for other terminals and receiving sidelink feedback information of other terminals; resource coordination with other communication groups or other functions. For example, terminal 1 shown in Fig. 4 is a central control node in a communication group consisting of terminal 1 terminal 2 and terminal 3.

Device to device communication is a sidelink (SL) transmission technology based on D2D. Different from the traditional cellular system in which communication data is received or sent via a network device, the V2X system adopts a direct communication mode of terminal to terminal. Therefore, the V2X system has higher spectrum efficiency and lower transmission delay. Two transmission modes are defined in 3GPP: a first mode and a second mode.

In the first mode, the transmission resources of the terminal are allocated by the network device, and the terminal transmits data on the sidelink according to the resources allocated by the network device. The network device can allocate resources for single transmission to the terminal, or can allocate resources for semi-static transmission to the terminal. As shown in Fig. 1, the terminal is located within the network coverage, and the network allocates transmission resources for sidelink transmission to the terminal.

In the second mode, the terminal selects a resource in the resource pool for data transmission. As shown in Fig. 3, the terminal is outside the coverage area of the cell, and the terminal independently selects transmission resources in the pre-configured resource pool for sidelink transmission. Alternatively, in Fig. 1, the terminal independently selects transmission resources in the resource pool configured by the network for sidelink transmission.

Automatic driving needs to be supported in the NR-V2X, and higher requirements are put forward for data interaction between vehicles, such as a higher throughput, a lower delay, higher reliability, a larger coverage and more flexible resource allocation.

Broadcast transmission mode is supported in the LTE-V2X, and unicast and multicast transmission modes are introduced in NR-V2X.

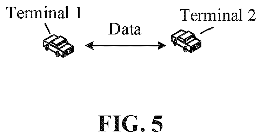

There is only one terminal at the receiving terminal for unicast transmission. Fig. 5 is a schematic diagram of unicast transmission provided by the present disclosure. As shown in Fig. 5, unicast transmission is executed between terminal 1 and terminal 2.

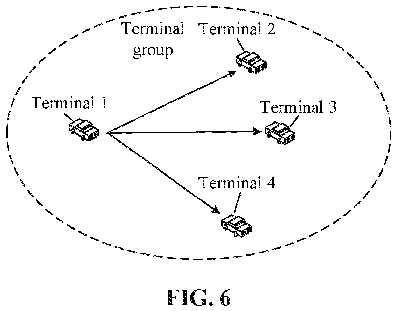

In the multicast transmission, the receiving terminal is all the terminals in a communication group or all the terminals in a transmission distance. Fig. 6 is a schematic diagram of multicast transmission provided by the present disclosure. As shown in Fig. 6, terminal 1, terminal 2, terminal 3 and terminal 4 constitute a communication group in which terminal 1 transmits data, and other terminals in the group are all receiving terminals.

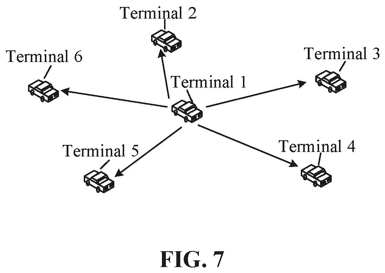

In the broadcast transmission, the receiving terminal is any terminal around the transmitting terminal. Fig. 7 is a schematic diagram of broadcast transmission provided by the present disclosure. As shown in Fig. 7, terminal 1 is a transmitting terminal, the other terminals including the terminals to 6 around terminal 1 are all receiving terminals.

In order to facilitate a better understanding of the embodiments of the present disclosure, sidelink feedback channels related to the present disclosure are described.

In order to improve the reliability of NR-V2X, a side feedback channel is introduced.

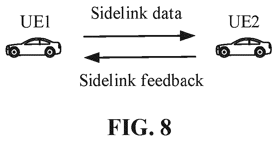

Fig. 8 is a schematic diagram of sidelink feedback provided by the present disclosure.

As shown in Fig. 8, in unicast transmission, the transmitting terminal transmits sidelink data (including physical sidelink control channel (PSCCH) and physical sidelink shared channel (PSSCH)) to the receiving terminal, and the receiving terminal transmits hybrid automatic repeat request (HARQ) feedback information (including acknowledgement (ACK) or negative acknowledgement (NACK)) to the transmitting terminal, and the transmitting terminal determines whether to perform retransmission based on the feedback information of the receiving terminal. The HARQ feedback information is carried in a sidelink feedback channel, such as PSFCH.

Exemplarily, the sidelink feedback may be activated or deactivated by the pre-configuration information or the network configuration information, or by the transmitting terminal. If the sidelink feedback is activated, the receiving terminal receives sidelink data sent by the transmitting terminal, and feeds back an ACK or a NACK to the transmitting terminal according to a detection result, and the transmitting terminal determines to send retransmission data or new data according to the feedback information of the receiving terminal. If the sidelink feedback is deactivated, the receiving terminal does not need to send feedback information, and the transmitting terminal usually sends data in a blind retransmission mode, for example, the transmitting terminal repeatedly sends each sidelink data K times, instead of determining whether to send retransmission data according to the feedback information of the receiving terminal.

In order for a better understanding of the embodiments of the present disclosure, a format of the sidelink feedback channel in the present disclosure is described.

In NR-V2X, a side feedback channel PSFCH is introduced. The PSFCH carries 1-bit hybrid automatic repeat request acknowledgement (HARQ-ACK) information, and occupies two time-domain symbols in time domain (the second symbol carries sidelink feedback information, and data on the first symbol is a copy of the data on the second symbol, but the symbol is used as automatic gain control (AGC) at the receiving terminal), and occupies one physical resource block (PRB) in frequency domain.

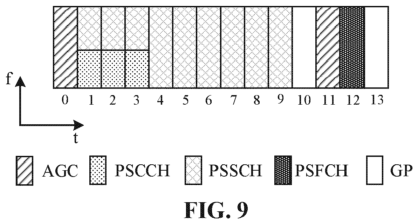

Fig. 9 is a schematic diagram of a slot structure of a PSFCH and a PSCCH/PSSCH provided by the present disclosure.

As shown in Fig. 9, a slot may include time domain symbols occupied by the PSFCH, PSCCH and PSSCH. Specifically, in a slot, the last symbol is used as a guard period (GP), the second one symbol from the end is used for PSFCH transmission, data in the third one symbol from the end is the same as the data of the PSFCH symbol and is used as an AGC, the fourth one symbol from the end is also used as the GP, the data on the first symbol in the slot is the same as the data on the second time domain symbol in the slot and is usually used as the AGC, the PSCCH occupies three time domain symbols, and the remaining symbols can be used for PSSCH transmission. It should be understood that information in the time domain symbols occupied by the PSFCH channel and PSCCH/PSSCH channel in one slot is only schematically represented in Fig. 9, and the size relationship of frequency domain resources occupied by different channels is not shown.

In order for a better understanding of the embodiments of the present disclosure, the resources of the sidelink feedback channel in the present disclosure are described.

In order to reduce the overhead of the PSFCH channel, one slot in every P slots includes PSFCH transmission resources, i.e. the period of sidelink feedback resources is P slots, P = {1, 2, 4}, and the parameter P is pre-configured or configured by the network.

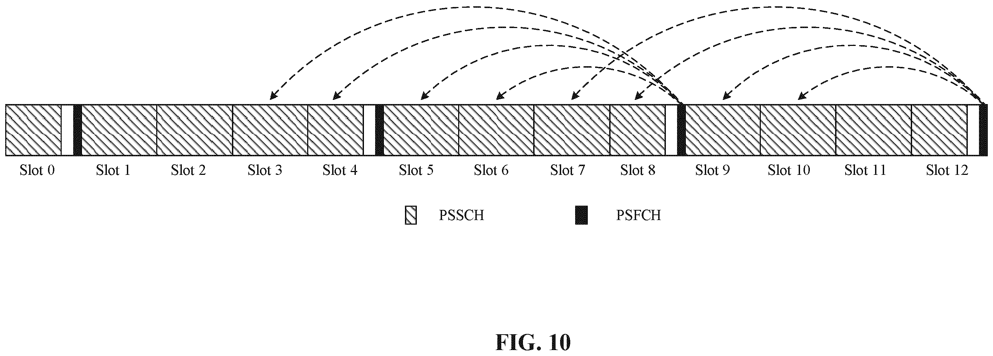

Fig. 10 is a schematic diagram of resources of a side feedback channel provided by the present disclosure.

As shown in Fig. 10, assuming P=4, the minimum time interval between the PSSCH and a PSFCH associated with the PSSCH is 2 slots. Therefore, the feedback information of the PSSCH transmitted in slots 3, 4, 5 and 6 is transmitted in slot 8. Thus, slots {3, 4, 5 and 6} can be regarded as a set of slots, and the PSFCH corresponding to the PSSCH transmitted in this set of slots is in the same slot. It should be understood that when PSSCH and PSFCH are comprised in a slot, Fig. 10 schematically shows the time domain positions of the PSSCH and PSFCH without showing the last GP symbol in the slot.

The unlicensed spectrum is the spectrum divided by countries and regions and can be used for radio device communication. This spectrum is usually considered as shared spectrum, that is, communication devices in different communication systems can use the spectrum as long as they meet the regulatory requirements set by countries or regions on the spectrum, without applying for exclusive spectrum authorization from the government.

In order to make all communication systems using unlicensed spectrum coexist amicably for this spectrum, some countries or regions have stipulated the regulatory requirements that must be met when using unlicensed spectrum. For example, the communication device follows the principle of "listen before talk (LBT)". That is, before the communication device sends signals on a channel in unlicensed spectrum, the communication device performs channel listening, and the communication device sends a signal only when the channel listening result indicates that the channel is idle. If the channel listening result of the communication device on the channel in the unlicensed spectrum indicates that the channel is busy, the communication device cannot send a signal. In order to ensure fairness, the time occupied by the communication device for signal transmission on the channel in unlicensed spectrum cannot exceed the maximum channel occupancy time (MCOT).

This present disclosure studies the sidelink transmission system based on unlicensed spectrum (called SL-U system). Communication in unlicensed frequency band usually needs to meet the regulatory requirements. For example, if the terminal communicates in unlicensed frequency band, the frequency band occupied by the terminal needs to be greater than or equal to 80% of the system bandwidth. Therefore, in order to enable more users to simultaneously access the channel as possible, the present disclosure introduces the interlaced resource block (IRB) resource configuration mode. That is, one IRB resource includes N PRBs, m IRB resources are arranged in the frequency band range, and the PRBs comprised by the m-th IRB are {m, M + m, 2M + m, 3M + m, ...}.

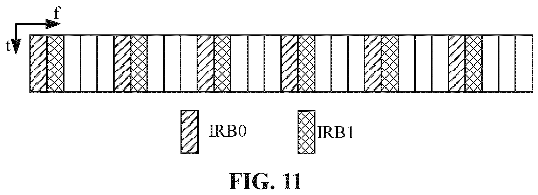

Fig. 11 shows an example of an IRB-based transmission resource provided by an embodiment of the present disclosure.

As shown in Fig. 11, assuming that the system bandwidth includes 30 PRBs, the 30 PRBs may also be divided into 5 interlaced resrouce blocks, i.e. M=5. Each interlaced resrouce blocks may include 6 PRBs, i.e. N=6, and a frequency-domain spacing of two adjacent PRBs in one interlaced resrouce block is fixed, i.e. the spacing between two adjacent PRBs in one interlaced resrouce block is 5 PRBs.

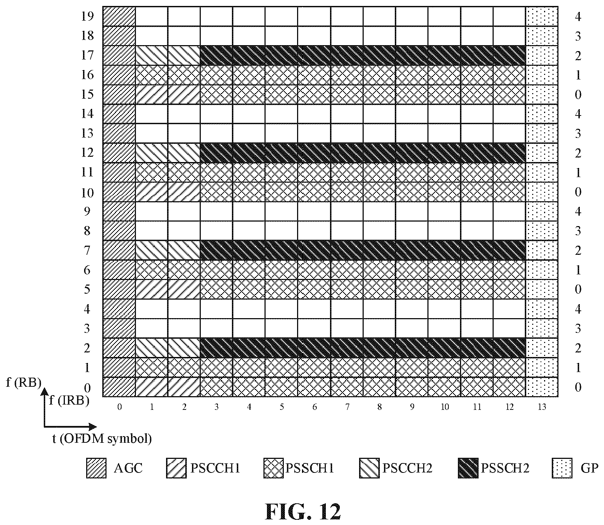

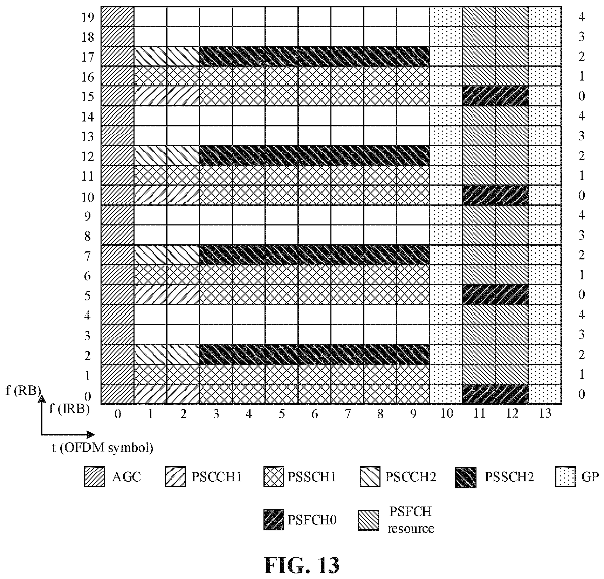

If the IRB-based resource allocation granularity is adopted, the channels such as the PSCCH, the PSSCH and the PSFCH of the SL-U system are all based on IRB structure. Figs. 12 and 13 are schematic diagrams of an IRB-based frame structure provided by the embodiment of the present disclosure, and Fig. 12 is a schematic diagram of a frame structure including the PSCCH and PSSCH and excluding the PSFCH in a slot, and Fig. 13 is a schematic diagram of a frame structure including the PSCCH, the PSSCH and the PSFCH in a slot. In Fig. 12 and Fig. 13, the system bandwidth includes 20 PRBs, 5 IRB resources are configured, i.e. M=5, and each IRB resource includes 4 PRBs, the number at the left side represents an index of the PRB and the number at the right side represents an index of the IRB.

In a frame structure excluding the PSFCH as shown in Fig. 12, the system configures that the PSCCH occupies one IRB resource and two OFDM symbols in time domain, and PSSCH has a granularity of IRB, and data on the first symbol in a slot is the same as data on the second symbol in the slot in time domain, which is usually used as an AGC, and the last symbol is a GP symbol. For example, PSSCH1 occupies IRB 0 and IRB 1, and PSCCH1 corresponding to PSSCH1 occupies IRB 0, that is, a frequency domain start position of the PSCCH is the same as that of the PSSCH scheduled by the PSCCH. For another example, PSSCH2 occupies IRB 2, and PSCCH2 corresponding to PSSCH2 also occupies IRB 2. As shown in Fig. 13, a slot structure of the PSFCH resource is included, and one PSFCH occupies one IRB resource. For example, PSFCH0 occupies IRB 0. Further the data on the first time-domain symbol shown in Fig. 12 and Fig. 13 may be a duplicate of the data on the second symbol, and the first time-domain symbol is used as an AGC.

It should be noted that Fig. 12 and Fig. 13 are only examples of the present disclosure and should not be construed as a limit for the present disclosure. For example, in other alternative embodiment, resources occupied by the second-order SCI and resources occupied by the PSCCH demodulation reference signal (DMRS) and the PSSCH DMRS may also be involved in the illustrated frame structure.

However, as described above, in the PRB-based PSFCH transmission, one slot in every P slots is defined to include PSFCH transmission resources to reduce the overhead of PSFCH. Accordingly, after IRB-based sidelink transmission is introduced, how to realize IRB-based PSFCH transmission is an urgent technical problem to be solved. Based on this, the embodiment of the present disclosure provides a wireless communication method, a first terminal device and a second terminal device. By specifying the IRB used for transmitting PSFCH, not only the system performance can be improved, but also the resource utilization rate can be improved.

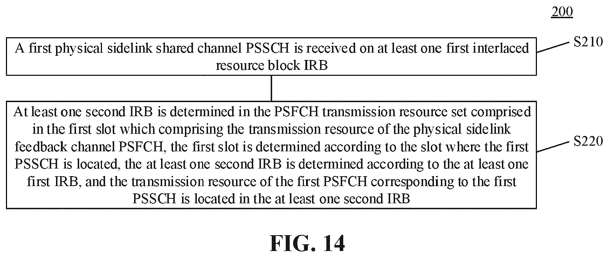

Fig. 14 is a schematic flowchart of a wireless communication method 200 provided by an embodiment of the present disclosure. The method 200 may be executed by the first terminal device. The first terminal device may be a receiving terminal for receiving the PSSCH. For example, the first terminal device may be the above terminal B, and the first terminal device may also be the above terminal A.

At S210, a first physical sidelink shared channel PSSCH is received on at least one first interlaced resource block IRB.

At S220, at least one second IRB is determined in the PSFCH transmission resource set included in the first slot including the transmission resource of the physical sidelink feedback channel PSFCH. The first slot is determined according to the second slot where the first PSSCH is located, the at least one second IRB is determined according to the at least one first IRB, and the transmission resource of the first PSFCH corresponding to the first PSSCH is located in the at least one second IRB. The first PSFCH carries sidelink feedback information corresponding to the first PSSCH, and the sidelink feedback information comprises an ACK or a NACK.

In the embodiment, the transmission resource of the first PSFCH corresponding to the first PSSCH is designed to be located in the at least one second IRB determined according to the at least one first IRB, and the at least one second IRB is designed to be an IRB determined in the PSFCH transmission resource set included in the first slot including the PSFCH transmission resource. On the one hand, the first terminal device can implement the transmission of the first PSFCH based on the IRB, which improves the system performance. On the other hand, the PSFCHs corresponding to the PSSCH in different slots can be multiplexed and transmitted in the same slot in the same way, which improves the resource utilization rate.

It should be noted that since the frequency domain resource granularity involved in the solution of the present disclosure is the IRB. That is, the first PSSCH, the transmission resource set of the PSFCH and the transmission resource of the first PSFCH are all in a resource granularity of IRB. The first IRB occupied by the first PSSCH has a correspondence with the second IRB of the first PSFCH. Optionally, the first IRB and the second IRB may have a one-to-one correspondence, a many-to-one correspondence, or a one-to-many correspondence, which is not limited in the present disclosure. For example, an IRB of the resource pool in which the PSSCH is located may correspond to an IRB for transmitting the PSFCH, or a plurality of IRBs of the resource pool in which the PSSCH is located may correspond to an IRB for transmitting the PSFCH, or an IRB of the resource pool in which the PSSCH is located may correspond to a plurality of IRBs for transmitting the PSFCH.

It should be noted that, in the embodiment of the present disclosure, the IRB X of the PSSCH slot corresponds to the IRB Y in the PSFCH slot, which represents that the available transmission resources of the PSFCH corresponding to the the PSSCH transmitted on the IRB X of the PSSCH slot include the IRB Y in the PSFCH slot. IRB X and IRB Y of a PSSCH slot correspond to IRB Z in a PSFCH slot, which represents that available transmission resources of a PSFCH corresponding to the PSSCH transmitted on IRB X of a PSSCH slot and/or the PSSCH transmitted on IRB Y of a PSSCH slot include IRB Z in a PSFCH slot. IRB X of the PSSCH slot corresponds to IRB Y and IRB Z in the PSFCH slot, which represents that available transmission resources of a PSFCH corresponding to the PSSCH transmitted on IRB X of PSSCH slot include IRB Y and/or IRB Z in the PSFCH slot. X, Y, and Z represent indexes of the IRB.

It should be noted that, in the embodiment of the present disclosure, the IRB X in the PSSCH slot corresponds to code domain resources [A, B] of the IRB Y in the PSFCH slot, which represents that the available transmission resources of a PSFCH corresponding to the PSSCH transmitted on the IRB X of the PSSCH slot include the IRB Y in the PSFCH slot, and the available code domain resources of the PSFCH include code domain resources in a code domain resource set [A, B]. X and Y represent indexes of the IRB, and A and B represent the index of the code domain resources.

The first PSSCH may occupy N₁ IRBs, a value of N₁ is related to the size of a transmission block corresponding to sidelink data carried on the first PSSCH. The first PSFCH may occupy N₂ IRBs, and N₂ is predefined or determined according to resource pool configuration parameters. Preferably, N₂= 1. It should be understood that if N₂= 1, that is, one PSFCH occupies one IRB. Since the N1 IRBs occupied by the first PSSCH may correspond to N₃ IRBs for transmitting the PSFCH, the transmission resource of the first PSFCH is located in the N₃ IRBs for transmiting the PSFCH. N₁, N₂, N₃ are all positive integers.

Optionally, since the first PSSCH and the first PSFCH are all in a frequency domain resource granularity of IRB, the IRB occupied by the first PSSCH may correspond to the IRB of the first PSFCH. That is, the IRB in which the transmission resource of the first PSSCH is located may correspond to the IRB in which the transmission resource of the first PSFCH is located. In other words, the IRB in which the transmission resources of the first PSFCH are located may be determined according to the IRB in which the transmission resources of the first PSSCH are located. For example, the IRB in which the transmission resources of the first PSFCH are located may be determined according to an index of the IRB corresponding to a frequency domain starting position of the transmission resources of the first PSSCH, or the IRB in which the transmission resources of the first PSFCH are located may be determined according to indexes of all IRB corresponding to the transmission resources of the first PSSCH. In addition, the transmission resources of the first PSFCH according to the present disclosure may include time-domain resources, frequency-domain resources and code-domain resources, which is not limited in the present disclosure.

It should also be noted that the first slot in present disclosure may be determined according to the second slot where the first PSSCH is located, but the specific implementation mode thereof is not limited in present disclosure.

The first terminal device may determine a slot in which the first PSFCH is located based on the slot in which the first PSSCH is located and a minimum time interval between the PSSCH and the PSFCH. For example, the minimum time interval between the PSSCH and the PSFCH is k slots. If the first PSSCH is received by the first terminal device in slot n, the slot i.e. a first slot in which the first PSFCH is located is the first slot including the PSFCH transmission resource subsequent to n+k (including (n+k) slots).

In some embodiments, IRBs comprised in a PSSCH resource pool has a correspondence with IRBs in a PSFCH slot, i.e. an IRB resource corresponding to a PSFCH associated with the PSSCH may be determined based on the IRB resource occupied by the PSSCH. For example, the PSSCH resource pool configured in the resource pool configuration information includes N₄ IRBs. The transmission resources available for transmitting the PSFCH in the PSFCH slot include N₅ IRBs. The IRB in each PSSCH resource pool may correspond to an IRB in the PSFCH slot. If one PSSCH occupies N₁ IRBs, N₃ IRBs corresponding to the N₁ IRBs may be determined in the PSFCH slot. The transmission resource of the PSFCH associated with the PSSCH is located in the shown N₃ IRBs. N₁, N₃, N₄, N₅ are all positive integers.

In some embodiments, the IRB comprised in the PSSCH resource pool the IRB in the PSFCH slot.

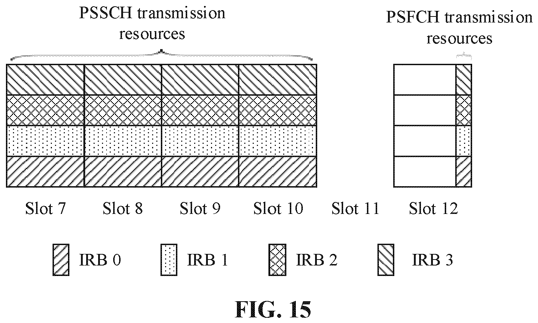

Fig. 15 shows an example in which an IRB in a PSSCH resource pool has a one-to-one correspondence with an IRB in a PSFCH slot provided by an embodiment of the present disclosure.

As shown in Fig. 15, assuming that the period of the PSFCH is 4 slots and the minimum time interval between the PSSCH and the PSFCH associated with the PSSCH is 2 slots. As an example, the PSSCH transmission resources include slots 7 to 10 in the time domain and IRB 0 to IRB 3 in the frequency domain. The PSFCH transmission resources include IRB 0 to IRB 3 in slot 12. The PSFCH corresponding to the PSSCH transmitted in slots 7 to 10 are transmitted in slot 12, that is, the PSSCH slots associated with the PSFCH slot 12 include slots 7 to 10. It should be understood that Fig. 15 only schematically shows that one slot includes four IRBs, and does not show that one IRB corresponds to a plurality of discrete RBs in the frequency domain.

Furthermore, illustratively, the IRB in which the PSSCH transmission resource is located has a one-to-one correspondence with the IRB in which the transmission resource of the PSFCH corresponding to the PSSCH is located. That is, the available transmission resources for a PSFCH corresponding to the PSSCH in slot 7 to slot 10 which is transmitted on IRB 0 include IRB 0 in slot 12, the available transmission resources for a PSFCH corresponding to the PSSCH in slot 7 to slot 10 which is transmitted on IRB 1 include IRB 1 in slot 12, the available transmission resources for a PSFCH corresponding to the PSSCH in slot 7 to slot 10 which is transmitted on IRB 2 include IRB 2 in slot 12, and the available transmission resources of a PSFCH corresponding to the PSSCH in slot 7 to slot 10 which is transmitted on IRB 3 include IRB 3 in slot 12.

In conjunction with the present disclosure, the first slot is determined according to the second slot where the first PSSCH is located. For example, assuming that the slot in which the transmission resource of the first PSSCH is located is in slot 7 to slot 10, the period P of the PSFCH is set to 4 slots, and the minimum time interval between the PSSCH and the PSFCH is 2 slots, the first slot is slot 12, i.e. a slot comprising the PSFCH transmission resource is slot 12. In addition, the transmission resource of the first PSFCH corresponding to the first PSSCH is located in the at least one second IRB, the at least one second IRB belongs to a PSFCH transmission resource set included in the first slot, and the at least one second IRB is determined according to the at least one first IRB. For example, assuming that the IRB in each PSSCH slot includes IRB 0, IRB 1, IRB 2, IRB 3, the PSFCH slot (i.e. the IRB corresponding to the first slot) includes IRB 0, IRB 1, IRB 2, IRB 3, and the IRBs in the PSSCH slot has one-to-one correspondence with the IRBs in the PSFCH slot, the at least one second IRB may also include IRB 1 if at least one first IRB in which the transmission resource of the first PSSCH is located includes IRB 1.

In some embodiments, IRBs included in the PSSCH resource pool have a many-to-one correspondence with the IRB in the PSFCH slot.

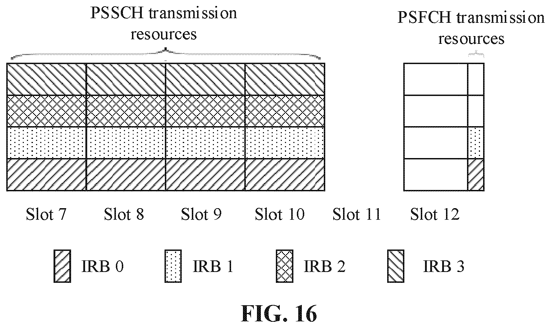

Fig. 16 shows an example in which IRBs in a PSSCH resource pool have a many-to-one correspondence with an IRB in a PSFCH slot provided by an embodiment of the present disclosure.

As shown in Fig. 16, assuming that the period of the PSFCH is 4 slots and the minimum time interval between the PSSCH and a PSFCH associated with the PSSCH is 2 slots. For example, the PSSCH transmission resources include slots 7 to 10 in time domain and IRB 0 to IRB 3 in frequency domain, and PSFCH transmission resources include IRB 0 to IRB 1 in slot 12. The PSFCH corresponding to PSSCH transmitted in slots 7 to 10 are transmitted in slot 12, that is, the PSSCH slot associated with the slot 12 of the PSFCH include slots 7 to 10. It should be understood that Fig. 16 shcematically shows that only four IRBs are contained in a slot, but does not s that one IRB corresponds to a plurality of discrete RBs in frequency domain.

Furthermore, for example, the IRBs in which the PSSCH transmission resource is located have a many-to-one correspondence with the IRB in which a PSFCH transmission resource corresponding to the PSSCH transmission resource is located. That is to say, N₄= 4, N₅= 2, i.e. two IRBs in the PSSCH slot correspond to one IRB in the PSFCH slot. As an example, the available transmission resources of a PSFCH corresponding to a PSSCH in slots 7 to 10 which is transmitted on IRB 0 and/or IRB 1 include IRB 0 for slot 12, and the available transmission resources of a PSFCH corresponding to a PSSCH in slots 7 to 10 which is transmitted on IRB 2 and/or IRB 3 include IRB 1 of slot 12. Exemplarily, if a PSSCH occupies N1= 2 IRBs, such as IRB 0 and IRB 1, the IRB occupied by the PSFCH corresponding to the PSSCH can be determined as IRB 0 in the PSFCH slot. If a PSSCH occupies N1= 1 IRB, such as IRB 0, the IRB occupied by the PSFCH corresponding to the PSSCH can be determined as IRB 0 in the PSFCH slot. If a PSSCH occupies N1= 1 IRB, such as IRB 2, the IRB occupied by the PSFCH corresponding to the PSSCH can be determined as IRB 1 in the PSFCH slot.

In conjunction with the present disclosure, the first slot is determined according to the second slot where the first PSSCH is located. For example, assuming that the slot in which the transmission resource of the first PSSCH is located is slot 7 to slot 10, the period P of the PSFCH is set to 4 slots, and the minimum time interval between the PSSCH and the PSFCH is 2 slots, the first slot is slot 12, i.e. the slot including the PSFCH transmission resource is slot 12. In addition, the transmission resource of the first PSFCH corresponding to the first PSSCH is located in the at least one second IRB, the at least one second IRB belongs to a PSFCH transmission resource set included in the first slot, and the at least one second IRB is determined according to the at least one first IRB. For example, assuming that the IRB in each PSSCH slot includes IRB 0, IRB 1, IRB 2, IRB 3, the PSFCH transmission resource set (i.e. the IRB corresponding to the first slot) includes IRB 0 and IRB 1. In this case, if at least one first IRB in which the transmission resource of the first PSSCH is located includes IRB 0 and/or IRB 1, the at least one second IRB may include IRB 0.

In some embodiments, an IRB included in a PSSCH resource pool has a one-to-many correspondence with IRBs in a PSFCH slot.

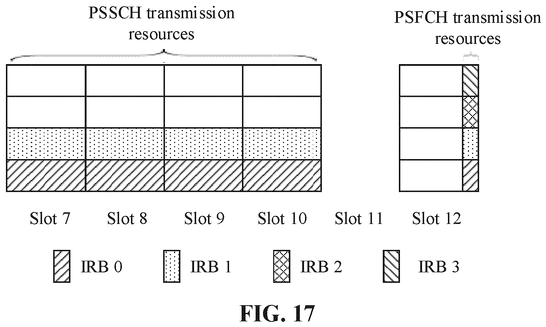

Fig. 17 is an example that IRBs in a PSSCH resource pool has a one-to-many correspondence with IRBs in a PSFCH slot provided by an embodiment of the present disclosure.

As shown in Fig. 17, assuming that the period of the PSFCH is 4 slots and the minimum time interval between the PSSCH and the PSFCH associated with the PSSCH is 2 slots. As an example, the PSSCH transmission resources include slots 7 to 10 in time domain and IRB 0 to IRB 1 in frequency domain, and PSFCH transmission resources include IRB 0 to IRB 3 in slot 12. The PSFCH corresponding to the PSSCH transmitted in slots 7 to 10 are transmitted in slot 12, that is, a slot of the PSSCH associated with slot 12 of the PSFCH includes slots 7 to 10. It should be understood that Fig. 17 only schematically shows that one slot includes four IRBs, and does not show that one IRB corresponds to a plurality of discrete RBs in the frequency domain.

Furthermore, the IRB in which the PSSCH transmission resource is located has a one-to-many correspondence with IRBs in which the PSFCH transmission resource corresponding to the PSSCH transmission resource is located. That is, N₄= 2, N₅= 4, i.e. 1 IRB in the PSSCH slot corresponds to 2 IRBs in the PSFCH slot. The available transmission resources for a PSFCH corresponding to the PSSCH in slot 7 to slot 10 which is transmitted on IRB 0 include IRB 0 and IRB 1 in slot 12, and the available transmission resources of a PSFCH corresponding to the PSSCH in slot 7 to slot 10 which is transmitted on IRB 1 include IRB 2 and IRB 3 in slot 12. Exemplarily, if a PSSCH occupies N1=1 IRB, such as IRB 0, it can be determined that the transmission resources of the PSFCH corresponding to the PSSCH in the PSFCH slot includes IRB 0 and IRB 1. If a PSSCH occupies N1=2 IRBs, such as IRB 0 and IRB 1, it can be determined that the transmission resources of the PSFCH corresponding to the PSSCH in the PSFCH slot includes IRB 0, IRB 1, IRB 2 and IRB 3.

In conjunction with the present disclosure, the first slot is determined according to the second slot where the first PSSCH is located. For example, assuming that the slot in which the transmission resource of the first PSSCH is located is slot 7 to slot 10, the period P of the PSFCH is set to 4 slots, and the minimum time interval between the PSSCH and the PSFCH is 2 slots, the first slot is slot 12, i.e. a slot including the PSFCH transmission resource is slot 12. In addition, the transmission resource of the first PSFCH corresponding to the first PSSCH is located in the at least one second IRB, the at least one second IRB belongs to the PSFCH transmission resource set comprised in the first slot, and the at least one second IRB is determined according to the at least one first IRB. For example, assuming that the IRB in each PSSCH slot includes IRB 0 and IRB 1, the PSFCH transmission resource set (i.e. the IRB corresponding to the first slot) includes IRB 0, IRB 1, IRB 2 and IRB 3. In this case, if at least one first IRB in which the transmission resource of the first PSSCH is located includes IRB 0, the at least one second IRB may include IRB 0 and IRB 1.

In further embodiments, the at least one second IRB is determined from the at least one first IRB and the second slot when the number of IRBs in the PSSCH resource pool is less than the number of IRBs in the PSFCH slot.

As shown in Fig. 17, assuming that the period of the PSFCH is 4 slots and the minimum time interval between the PSSCH and a PSFCH associatd with the PSSCH is 2 slots. For example, the PSSCH transmission resources include slots 7 to 10 in time domain and IRB 0 to IRB 1 in frequency domain. PSFCH transmission resources include IRB 0 to IRB 3 in slot 12. The PSFCH corresponding to PSSCH transmitted in slots 7 to 10 are transmitted in slot 12, that is, slots of the PSSCH associated with the slot 12 of the PSFCH include slots 7 to 10. It should be understood that Fig. 17 only schematically shows that one slot includes four IRBs, and does not show that one IRB corresponds to a plurality of discrete RBs in the frequency domain.

For example, the PSSCH resource pool includes 2 IRBs, i.e. N₄= 2, the PSFCH slot includes 4 IRBs, i.e. N₅= 4. In this case, transmission resources of a PSFCH corresponding to a PSSCH transmitted in different PSSCH slots may correspond to different IRBs in the PSFCH slots. For example, the transmission resource of a PSFCH corresponding to a PSSCH transmitted on IRB 0 of slot 7 includes IRB0 of slot 12, the transmission resource of a PSFCH corresponding to a PSSCH transmitted on IRB 1 of slot 7 includes IRB 1 of slot 12, the transmission resource of a PSFCH corresponding to a PSSCH transmitted on IRB 0 of slot 8 includes IRB 2 in slot 12, the transmission resource of a PSFCH corresponding to a PSSCH transmitted on IRB 1 of slot 8 includes IRB 3 of slot 12, the transmission resource of a PSFCH corresponding to a PSSCH transmitted on IRB 0 of slot 9 includes IRB 0 of the slot 12, the transmission resource of a PSFCH corresponding to a PSSCH transmitted on IRB 1 of slot 9 includes IRB 1 of slot 12, the transmission resource of a PSFCH corresponding to a PSSCH transmitted on IRB 0 of slot 10 includes IRB 2 of slot 12, the transmission resource of a PSFCH corresponding to a PSSCH transmitted on IRB 1 of slot 10 includes IRB 3 of slot 12. Therefore, PSFCH transmission resources corresponding to the PSSCHs transmitted on slot 7 and slot 8 correspond to different IRBs in slot 12, that is, PSFCHs corresponding to PSSCHs transmitted on slot 7 and slot 8 performs frequency division multiplexing in slot 12. PSFCH transmission resources corresponding to PSSCHs transmitted on slot 9 and slot 10 correspond to different IRBs in slot 12, that is, PSFCHs corresponding to PSSCHs transmitted on slot 9 and slot 10 performs frequency division multiplexing in slot 12. PSFCH transmission resources corresponding to PSSCHs transmitted on the same IRB in slot 7 and slot 9 correspond to the same IRB in slot 12. Furthermore, different code domain resource sets may be determined in the same IRB. Therefore, PSFCH transmission resources corresponding to PSSCHs transmitted on the same IRB in slot 7 and slot 9 performs code division multiplexing in slot 12. The PSFCH transmission resources corresponding to the PSSCHs transmitted on the same IRB in slot 8 and slot 10 correspond to the same IRB in slot 12. Further, different code domain resource sets may be determined in the same IRB. Therefore, the PSFCH transmission resources corresponding to the PSSCHs transmitted on the same IRB in slot 8 and slot 10 perform code division multiplexing in slot 12.

Thus, when the number of IRBs in the PSSCH resource pool is less than the number of IRBs in the PSFCH slot, the PSFCH transmission resources corresponding to PSSCHs transmitted in different PSSCH slots may perform frequency division multiplexing or code division multiplexing in the PSFCH slot, and the IRB resources of the PSFCH corresponding to the PSSCH in the PSFCH slot may be determined according to information about the slot where the PSSCH is located and information about the IRB occupied by the PSSCH.

It should be understood that Figs. 15 to 17 show only examples of the present disclosure and should not be construed as a limit for the present disclosure. For example, for convenience of example, one IRB in Figs. 15 to 17 includes one PRB, but in actual implementation, a plurality of PRBs included in one IRB should be uniformly distributed in the frequency domain, which is not repeated herein. Further, Figs. 15-17 show examples in which the frequency domain resources in one slot include 4 or 2 IRBs, but in other alternative embodiments, the frequency domain resources in one slot may also include other numbers of IRBs. In addition, Fig. 15 shows that an IRB in which the PSSCH transmission resource is located corresponds to an IRB in the PSFCH slot, that is, the IRB in which the PSFCH transmission resource is located has a one-to-one correspondence with the IRB in which the PSSCH transmission resource is located, but in other alternative embodiments, the IRB in which the PSFCH transmission resource is located may have a one-to-many or many-to-one correspondence with the IRB in which the PSSCH transmission resource is located, which is not limited herein. For example, Fig. 16 shows that two IRBs where PSSCH transmission resources are located correspond to one IRB in the PSFCH slot, that is, one IRB where PSFCH transmission resources are located corresponds to two IRBs where the PSFCH transmission resources are located, and Fig. 17 shows that one IRB where PSSCH transmission resources are located corresponds to two IRBs in PSFCH slot, that is, two IRBs where PSFCH transmission resources are located correspond to one IRB where PSSCH transmission resources are located.

In some embodiments, the method 200 may further include the following operations.

A first transmission resource subset available for transmitting the first PSFCH is determined in the PSFCH transmission resource set. The first transmission resource subset includes Ntotal PSFCH transmission resources, and the Ntotal PSFCH transmission resources are determined based on a first number and the number of IRBs included in the at least one second IRB. The number of IRBs included in the first transmission resource subset is equal to the number of IRBs included in the at least one second IRB, and the first number is determined based on the number of code domain resources included in a first code domain resource set in the first transmission resource subset. Exemplarily, the first number is the number of code domain resources included in a first code domain resource set in the first transmission resource subset.

In some embodiments, the first code domain resource set is a code domain resource set corresponding to, in the second IRB, a first IRB of the at least one first IRB. In further embodiments, the first code domain resource set is a code domain resource set corresponding to the second slot. In further embodiments, the first code domain resource set is a corresponding code domain resource set for the second slot within a second IRB of the at least one second IRB.

In other words, one transmission resource in the first transmission resource subset may include a determined code domain resource and a determined frequency domain resource. Alternatively, different transmission resources in the first transmission resource subset have different code domain resources and/or frequency domain resources. In this embodiment, in order to ensure that the PSFCH in a slot including PSFCH transmission resources corresponds to the PSSCH transmitted in P slots, that is, to ensure that the PSFCH corresponds to the PSSCH carrying a plurality of slots in one slot, the PSFCH in the PSFCH slot may perform frequency division multiplexing and/or code division multiplexing.

Optionally, the PSFCH transmission resources in the first transmission resource subset are indexed first in an order of frequency domain and second in an order of code domain.

In other words, when the first terminal device determines a resource for transmitting the first PSFCH in the first transmission resource subset, a resource index for transmitting the first PSFCH may be determined in the first transmission resource subset in the order of frequency domain followed by code domain.

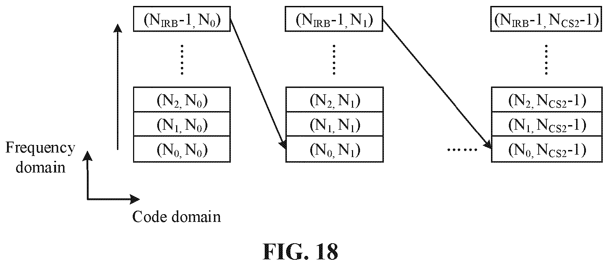

Fig. 18 is an example of a first transmission resource subset for transmitting a PSFCH provided by an embodiment of the present disclosure.

As shown in Fig. 18, it is assumed that the number of resources comprised in the first transmission resource subset of the PSFCH is Nₜₒₜₐₗ=N_{IRB}·N_{CS2}, that is, N_{IRB} IRBs are contained, and an index range of N_{IRB} is 0, 1, ..., N_{IRB}-1, N_{CS2} cyclic shift pairs are contained, and N_{CS2} indicates the number of code domain resources included in the first code domain resource set, which corresponds to each PSSCH slot or one IRB in a PSSCH slot, within one IRB in a PSFCH slot, and an index range of NCS2 is 0, 1, ..., N_{CS2}-1. The resource indexes of transmission resources in the first transmission resource subset of the PSFCH are ranked from low to high, which corresponds to first ranking from low to high according to the IRBs and then ranking from low to high according to the cyclic shift. Optionally, the cyclic shift pairs in the present disclosure may also be referred to as code domain resources.

An implementation of determining an IRB included in the first transmission resource subset described above is described below.

In some embodiments, the method 200 may further include an operation as follows.

The at least one second IRB is determined in the PSFCH transmission resource set based on IRB information of the at least one first IRB.

In some embodiments, the at least one second IRB is determined in the PSFCH transmission resource set based on IRB information of the at least one first IRB and information of the second slot.

Optionally, the IRB information of the at least one first IRB includes at least one of index information of the first one in the at least one first IRB; the number of IRBs in the at least one first IRB; or index information of all first IRBs in the at least one first IRB.

In other words, the IRB information of the at least one first IRB may also be referred to as information of the first IRB occupied by the first PSSCH. That is, the IRB information of the at least one first IRB includes at least one of index information of the first one of the at least one first IRB occupied by the first PSSCH; the number of IRBs comprised in the first IRB occupied by the first PSSCH; index information of all the first IRBs occupied by the first PSSCH.

Exemplarily, an index of the at least one second IRB may be determined based on an index of the first one of the at least one first IRB. For example, if PSSCH occupies IRB 0 and IRB 1, an index of the second IRB is determined according to IRB 0. For example, the index of the first one of the at least one first IRB is determined as the index of the at least one second IRB, that is, the index of the second IRB is IRB 0.

Exemplarily, an index of the at least one second IRB may be determined based on indexes of all of the at least one first IRB. For example, if the PSSCH occupies IRB 0 and IRB 1, the index of the second IRB is determined according to IRB 0 and IRB 1. For example, the indexes of all of the at least one first IRB are determined as the indexes of the at least one second IRB, i.e. the indexes of the second IRB are IRB 0 and IRB 1.

Exemplarily, if PSSCH occupies N₁ IRBs, the number of IRB occupied by the PSFCH may be N₃. If the IRB of the PSFCH is determined according to the index of the first one of the at least one first IRB occupied by the PSSCH, N3= 1. If the IRB of the PSFCH is determined according to the indexes of all of the first IRBs occupied by the PSSCH, N3 is greater than or equal to 1.

Exemplarily, if the PSSCH resource pool includes N₄ IRBs, the PSFCH slot includes N₅ IRBs, N₄= K₁× N₅, K₁ is a positive integer, every K₁ first IRBs in the PSSCH slot correspond to one IRB in the PSFCH slot. If N₅= K₂× N₄, and K₂ is a positive integer, one first IRB in the PSSCH slot corresponds to K₂ IRBs in the PSFCH slot. Further, a second IRB resource for transmitting the PSFCH can be determined in combination with the above information on the first IRB occupied by the PSSCH.

For example, the number N₄ of IRBs included in the PSSCH resource pool and the number N₅ of IRBs included in the PSFCH slot are determined based on the resource pool configuration information. In some embodiments, N₄ is an integer multiple of N₅, or N₅ is an integer multiple of N₄. That is, the number of IRBs in the PSSCH resource pool configured by the resource pool configuration information can be divisible by the number of IRBs included in the PSFCH slot, or the number of IRBs included in the PSFCH slot configured by the resource pool configuration information can be divisible by the number of IRBs in the PSSCH resource pool.

An above implementation of determining code domain resources included in the first code domain resource set provided by the present disclosure is described below.

In some embodiments, the method 200 may further include an operation as follows.

The first code domain resource set is determined based on at least one of the number of code domain resources available within one IRB; a period of a PSFCH; an index of the second slot; the number of IRBs in a PSSCH resource pool; the number of IRBs in a PSFCH slot; or information of code domain resources available in one IRB.

It should be noted that the number of code domain resources available in one IRB can be understood as the number of code domain resources available in one second IRB of the at least one second IRB. Similarly, the information of code domain resources available in the one IRB can be understood as information of code domain resources available within the second IRB. Optionally, the information of code domain resources may be index information of the code domain resources, such as an index number or an index value. The second IRB is an IRB for transmitting the PSFCH.

In some embodiments, the number of code domain resources available within the one IRB is determined based on pre-configuration information or network configuration information.

It should also be noted that the first code domain resource set in the present disclosure includes code domain resources, corresponding to the first one of the at least one first IRB, in the second IRB. In other words, the first code domain resource set includes a code domain resource, corresponding to one first IRB in a PSSCH slot, in one second IRB in a PSFCH slot. That is, if the slot in which the first PSSCH is located is a second slot and the slot in which the first PSFCH is located is a first slot, the first code domain resource set includes a code domain resource, corresponding to one first IRB in the second slot, in one second IRB in the first slot. Alternatively, if the IRB in which the first PSSCH is located is at least one first IRB and the IRB in which the first PSFCH is located is at least one second IRB, the first code domain resource set comprises code domain resources, corresponding to a first IRB of the at least one first IRB, within the second IRB. Optionally, the first code domain resource set of the present disclosure includes code domain resources, corresponding to the second slot, in a second IRB of the at least one second IRB. In other words, the first code domain resource set includes code domain resources, corresponding to a second slot where PSSCH is located, within a second IRB in a PSFCH slot. That is, if the slot in which the first PSSCH is located is a second slot and the slot in which the first PSFCH is located is a first slot, the first code domain resource set includes the code domain resources, corresponding to the second slot, in a second IRB in the first slot.

In some embodiments, the number of code domain resources in the first code domain resource set is determined based on the number of code domain resources available within one IRB and the period of the PSFCH. Optionally, the number of code domain resources in the first code domain resource set is the number of code domain resources, corresponding to the second slot, in a second IRB of the at least one second IRB. In other words, the number of code domain resources in the first code domain resource set is the number of code domain resources, corresponding to the second slot where PSSCH is located, in a second IRB in the PSFCH slot. That is, if the slot where the first PSSCH is located is the second slot and the slot where the first PSFCH is located is the first slot, the number of code domain resources in the first code domain resource set is the number of code domain resources, corresponding to the second slot, in a second IRB in the first slot.

In other words, the number of code domain resources in the PSFCH transmission resource set corresponding to one IRB in the PSSCH slot within the PSFCH slot is determined according to the number of code domain resources available in one IRB and the period of the PSFCH. That is to say, the first terminal device may determine the number of code domain resources corresponding to each PSSCH slot in a period of the PSFCH, or determine the number of code domain resources corresponding to one IRB in a PSSCH slot in the period of the PSFCH based on the number of code domain resources available in one IRB and the period of the PSFCH.

For example, the first terminal device may determine the number of code domain resources corresponding to each slot within the period of the PSFCH or the number of code domain resources corresponding to one IRB within a PSSCH slot within the period of the PSFCH based on the period of the PSFCH and the number of code domain resources available within the one IRB. For example, the number of code domain resources available within one IRB is N_{CS1}. The period of the PSFCH is P, and the number of code domain resources corresponding to each PSSCH slot in the period of the PSFCH is N_{CS1}/P, that is, the number of code domain resources included in the first code domain resource set corresponding to the second slot where the first PSSCH is located is N_{CS1}/P. In some embodiments, the number N_{CS1} of code domain resources available within one IRB and the period P of PSFCH are determined based on resource pool configuration information. N_{CS1} can be divisible by P. It should be understood that a case when N_{CS1} can be divisible by P is described above. If N_{CS1} cannot be divisible by P, it is necessary to round up or round down, which is not limited in the present disclosure.

In some embodiments, the number of code domain resources in the first code domain resource set is determined based on the number of code domain resources available within one IRB, the period of the PSFCH, the number of IRBs in the PSSCH resource pool and the number of IRBs included in the PSFCH slot. In some embodiments, the number of code domain resources available within one IRB is determined based on resource pool configuration information.

Exemplarily, the number of code domain resources in the first code domain resource set is (N_{CS1}/(P × K)), where N_{CS1} represents the number of code domain resources available within one IRB, P represents the period of the PSFCH, K is determined based on N₄ and N₅, N₄ indicates the number of IRBs included in PSSCH resource pool, N₅ indicates the number of IRBs included in the PSFCH slot. In one implementation, K=max (1, N₄/N₅), wherein max (a, b) denotes taking the maximum of a and b.

It should be noted that in this application, N₄ may be equal or unequal to N₅, which is not limited in the present disclosure.

Exemplarily, the number of code domain resources in the PSFCH transmission resource set corresponding to one IRB in a PSSCH slot within the PSFCH slot is (N₅ · N_{CS1})/(N₄ · P). It should be understood that the above formula represents a case that N₅·N_{CS1} is divisible by N₄·P or N_{CS1} is divisible by (P·K₁). If N₅·N_{CS1} is not divisible by N₄·P or N_{CS1} is not divisible by (P·K₁), it is necessary to round up or round down, which is not limited in the present disclosure, where K₁= N₄/N₅.

For example, if N₄= K₁·N₅, and K₁ is a positive integer, the number of code domain resources in the PSFCH transmission resource set corresponding to one IRB in a PSSCH slot in the PSFCH slot is: N_{CS1}/(P·K₁) or (N₅·N_{CS1})/(N₄·P), and otherwise, the number of code domain resources in the PSFCH transmission resource set corresponding to one IRB in a PSSCH slot within the PSFCH slot may be N_{CS1}/P. In other words, if N₄= K₁·N₅,, and K₁ is a positive integer, the number of code domain resources in a PSFCH transmission resource set corresponding to one IRB in a PSSCH slot in a PSFCH slot may be:(N₅•N_{CS1})/(N₄•P). If N₅= K₂•N₄, and K₂ is a positive integer, the number of code domain resources in the PSFCH transmission resource set corresponding to one IRB in the PSSCH slot within the PSFCH slot, the number may be N_{CS1}/P.

For another example, if N₄ is greater than N₅, the number of code domain resources in the PSFCH transmission resource set corresponding to one IRB in a PSSCH slot in a PSFCH slot is (N₅·N_{CS1})/(N₄·P), and otherwise, the number of code domain resources in the PSFCH transmission resource set corresponding to one IRB in a PSSCH slot in the PSFCH slot is N_{CS1}/P. In other words, if N₄ is greater than N₅, the number of code domain resources in the PSFCH transmission resource set corresponding to one IRB in a PSSCH slot in the PSFCH slot may be (N₅·N_{CS1})/(N₄·P). If N₄ is less than or equal to N₅, the number of code domain resources in the PSFCH transmission resource set corresponding to one IRB in a PSSCH slot in the PSFCH slot may be N_{CS1}/P.

In some embodiments, the number of transmission resources in the PSFCH transmission set corresponding to the first PSSCH (occupying N₁ first IRBs) is N₃× (N_{CS1}/(P × K)). N₃ indicates that the number of second IRBs corresponding to N₁ first IRBs occupied by the first PSSCH, K is determined according to N₄ and N₅, N₄ indicates the number of IRBs in the PSSCH resource pool, N₅ indicates the number of IRBs in the PSFCH slot. In an implementation, K=max (1, N₄/N₅).

In other words, the number of transmission resources in the first transmission resource subset in the present disclosure may be N₃× (N_{CS1}/(P × K)) or N₃× (N_{CS1}/P).

An implementation of determining the number of code domain resources in the first code domain resource set When the number N₄ of IRBs in the PSSCH resource pool is different from the number N₅ of IRBs in the PSFCH resource pool is exemplaried below in conjunction with the drawings.

In some embodiments, it is assumed that N₄= K₁·N₅, K₁ is a positive integer, N₄ indicates the number of IRBs in the PSSCH resource pool, N₅ indicates the number of IRBs included in the PSFCH slot. In this case, the number of IRBs in the PSSCH resource pool is greater than the number of IRBs in the PSFCH resource pool, that is, every K1 first IRBs in the PSSCH resource pool correspond to one second IRB in a PSFCH slot. Therefore, in P PSSCH slots corresponding to one PSFCH slot, in addition to performing code division multiplexing (CDM) on transmission resources in the PSFCH slot corresponding to the PSSCH in different slots, CDM is also performed on different IRBs in one PSSCH slot, to transmit the PSFCH corresponding to multiple PSSCH slots in on slot by code division multiplexing.

In conjunction with Figure 16, it is assumed that the PSSCH resource pool includes four IRBs (that is, N₄= 4) which are IRB 0, IRB 1, IRB 2, and IRB 3, respectively, and the PSFCH slot includes 2 IRBs (i.e. N₅= 2) which are IRB 0 and IRB 1, respectively. Then every Ki (N₄/N₅= 2, that is, K₁= 2) IRBs of the PSSCH corresponds to the IRB in a PSFCH slot, that is, the PSSCH transmitted by each IRB in the K₁ IRBs of the PSSCH. The PSFCH transmission resources includes the same IRB in the PSFCH slot, for example, IRB 0 and IRB 1 in the PSSCH slot correspond to IRB 0 in the PSFCH slot, and IRB 2 and IRB 3 in the PSSCH slot correspond to IRB1 in the PSFCH slot. In this case, the first terminal device may, according to the period of PSFCH and K1, group code domain resources available within one IRB to determine the number of code domain resources in the first code domain resource set, which may be, for example N_{CS2}= N_{CS1}/(P•K₁).

Specifically, due to K₁= 2, every two IRBs in the PSSCH slot correspond to one IRB in the PSFCH slot. For example, IRB 0 and IRB 1 in the PSSCH slot correspond to IRB 0 in the PSFCH slot. That is, the PSFCH transmission resources corresponding to the PSSCH transmitted on IRB 0 and/or IRB 1 in the PSSCH slot include IRB 0 in the PSFCH slot. IRB 2 and IRB 3 in the PSSCH slot correspond to IRB 1 in the PSFCH slot. That is, the PSFCH transmission resources corresponding to the PSSCH transmitted on IRB 2 and/or IRB 3 in the PSSCH slot include IRB 1 in the PSFCH slot.

It is assumed that N_{CS1}= 24, and an index range of the code domain resources includes [0, 23], P=4, K₁= 2, N_{CS2}= 3. That is, one IRB of a PSSCH slot corresponds to three code domain resources in the PSFCH slot. For example, IRB 0 in PSSCH slot 7 corresponds to code domain resources [0, 2] of IRB 0 in the PSFCH slot, and IRB 1 in PSSCH slot 7 corresponds to code domain resources [3, 5] of IRB 0 in the PSFCH slot; IRB 0 in PSSCH slot 8 corresponds to code domain resources [6, 8] of IRB 0 in the PSFCH slot, IRB 1 in PSSCH slot 8 corresponds to code domain resources [9, 11] of IRB 0 in the PSFCH slot; IRB 0 in PSSCH slot 9 corresponds to code domain resources [12, 14] of IRB 0 in the PSFCH slot, and IRB 1 in PSSCH slot 9 corresponds to code domain resources [15, 17] of IRB 0 in the PSFCH slot; IRB 0 in PSSCH slot 10 corresponds to code domain resources [18, 20] of IRB 0 in the PSFCH slot, and IRB 1 in PSSCH slot 10 corresponds to code domain resources [21, 23] of IRB 0 in the PSFCH slot. Similarly, IRB 2 in PSSCH slot 7 corresponds to code domain resources [0, 2] of IRB 1 in the PSFCH slot, and IRB 3 in PSSCH slot 7 corresponds to code domain resources [3, 5] of IRB 1 in the PSFCH slot; IRB 2 in PSSCH slot 8 corresponds to code domain resources [6, 8] of IRB 1 in the PSFCH slot, IRB 3 in PSSCH slot 8 corresponds to code domain resources [9, 11] of IRB 1 in the PSFCH slot; IRB 2 in PSSCH slot 9 corresponds to code domain resources [12, 14] of IRB 1 in PSFCH slot, and IRB 3 in PSSCH slot 9 corresponds to code domain resources [15, 17] of IRB 1 in the PSFCH slot; IRB 2 in PSSCH slot 10 corresponds to code domain resources [18, 20] of IRB 1 in the PSFCH slot, and IRB 3 in PSSCH slot 10 corresponds to code domain resources [21, 23] of IRB 1 in the PSFCH slot.

It should be noted that, in the embodiment of the present disclosure, IRB Y in PSSCH slot X corresponds to code domain resources [A, B] of IRB Z in the PSFCH slot, which represents the available transmission resources of the PSFCH corresponding to the PSSCH transmitted on IRB Y in PSSCH slot X include IRB Z in PSFCH slot, and the available code domain resources of the PSFCH include code domain resources in code domain resource set [A, B], where X represents an index of a slot, Y and Z represent an index of an IRB, A and B represent an index of the code domain resource.

As can be seen from the above, in the embodiment, IRB 0 and IRB 1 in slots 7 to 10 correspond to 24 code domain resources of IRB 0 in slot 12, respectively, and IRB 2 and IRB 3 in slots 7 to 10 correspond to 24 code domain resources of IRB 1 in slot 12, respectively. Therefore, the PSFCH corresponding to the PSSCH in multiple slots can be transmitted in one slot by code division multiplexing.

In some embodiments, it is assumed that N₅= K₂× N₄, K₂ is a positive integer, N₄ indicates the number of IRBs in the PSSCH resource pool, N₅ indicates the number of IRBs in the PSFCH slot. In this case, the number of IRBs in the PSSCH resource pool is less than that in the PSFCH slot, that is, one IRB in the PSSCH resource pool corresponds to K₂ IRBs in the PSFCH slot. Therefore, in P PSSCH slots, code division multiplexing (CDM) can be performed only on transmission resources in PSFCH slots corresponding to PSSCHs in different slots Therefore, the PSFCHs corresponding to PSSCHs in a plurality of slots can be transmitted in one slot by code division multiplexing.

In conjunction with Figure 17, it is assumed that the PSSCH transmission resource includes two IRBs (i.e., N₄= 2) which are IRB 0 and IRB 1, respectively, and the PSFCH transmission resource includes 4 IRBs (i.e. N₄= 4) which are IRB 0, IRB 1, IRB 2 and IRB 3, respectively. In this case, one IRB of the PSSCH corresponds to K₂ IRBs of the PSFCH slot (N₅/N₄= 2, that is, K₂= 2). For example, IRB 0 in the PSSCH slot corresponds to IRB 0 and IRB 1 in the PSFCH slot. That is, transmission resources of the PSFCH corresponding to the PSSCH transmitted on IRB 0 in the PSSCH slot include IRB 0 and IRB 1 in the PSFCH slot. IRB 1 in the PSSCH slot corresponds to IRB 2 and IRB 3 in the PSFCH slot. That is, whose corresponding transmission resources of the PSFCH corresponding to the PSSCH transmitted on IRB 1 in the PSSCH slot include IRB 2 and IRB 3 in the PSFCH slot. In this case, the first terminal device may determine the number of code domain resources in the first code domain resource set according to the period of the PSFCH. For example, the number of code domain resources in the first code domain resource set may be, for example N_{CS1}/P.

Specifically, due to K₂= 2, one IRBs in the PSSCH slot corresponds to two IRBs in the PSFCH slot. For example, IRB 0 in the PSSCH slot correspond to IRB 0 and IRB 1 in the PSFCH slot, and IRB 1 in the PSSCH slot correspond to IRB 2 and IRB 3in the PSFCH slot.

It is assumed that N_{CS1}= 24, and an index range of the code domain resources includes [0, 23], P=4, K₂= 2, N_{CS2}= 6. That is, one IRB of the PSSCH slot corresponds to six code domain resources in the PSFCH slot. For example, IRB 0 in PSSCH slot 7 corresponds to code domain resources [0, 5] of IRB 0 and code domain resources [0, 5] of IRB 1 in the PSFCH slot, IRB 0 in PSSCH slot 8 corresponds to code domain resources [6, 11] of IRB 0 and code domain resources [6, 11] of IRB 1 in the PSFCH slot, IRB 0 in PSSCH slot 9 corresponds to code domain resources [12, 17] of IRB 0 and code domain resources [12, 17] of IRB 1 in the PSFCH slot, IRB 0 in PSSCH slot 10 corresponds to code domain resources [18, 23] of IRB 0 and code domain resources [18, 23] of IRB 1 in the PSFCH slot. Similarliy, IRB 1 in PSSCH slot 7 corresponds to code domain resources [0, 5] of IRB 2 and code domain resources [0, 5] of IRB 3 in the PSFCH slot, IRB 1 in PSSCH slot 8 corresponds to code domain resources [6, 11] of IRB 2 and code domain resources [6, 11] of IRB 3 in the PSFCH slot, IRB 1 in PSSCH slot 9 corresponds to code domain resources [12, 17] of IRB 2 and code domain resources [12, 17] of IRB 3 in the PSFCH slot, IRB 1 in PSSCH slot 10 corresponds to code domain resources [18, 23] of IRB 2 and code domain resources [18, 23] of IRB 3 in the PSFCH slot.

It should be noted that, in the embodiment of the present disclosure, IRB Y in PSSCH slot X corresponds to code domain resources [A, B] of IRB Z and code domain resources [C, D] of IRB Q in the PSFCH slot which represents that the available transmission resources of a PSFCH corresponding to the PSSCH transmitted on IRB Y in PSSCH slot X include IRB Z and IRB Q in the PSFCH slot, and the available code domain resources of the PSFCH include code domain resources in the code domain resource set [A, B] of IRB Z and code domain resources in the code domain resource set [C, D] of IRB Q, where X represents an index of a slot, Y, Z and Q represent an index of an IRB, A, B, C and D represent an index of the code domain resource.

As can be seen from the above, in the embodiment, IRB 0 in slots 7 to 10 corresponds to 24 code domain resources of IRB 0 and 24 code domain resources of IRB 1 in slot 12, respectively, and IRB 1 in slots 7 to 10 corresponds to 24 code domain resources of IRB 2 and 24 code domain resources of IRB 3 in slot 12, respectively. Therefore, the PSFCH corresponding to PSSCHs in a plurality of slots can be transmitted in one slot by code division multiplexing.

In another embodiment, it is assumed that N₅= K₂× N₄, K₂ is a positive integer, N₄ indicates the number of IRBs in the PSSCH resource pool, N₅ indicates the number of IRBs in the PSFCH slot. In this case, frequency division multiplexing (FDM) and code division multiplexing (CDM) can be performed on transmission resources in PSFCH slots corresponding to different PSSCH slots among P PSSCH slots. Therefore, the PSFCH corresponding to PSSCHs in a plurality of slots is transmitted in one slot by code division multiplexing.

In conjunction with Fig. 17, it is assumed that the PSSCH transmission resource includes two IRBs (i.e., N₄= 2) which are IRB 0 and IRB 1, respectively, and the PSFCH transmission resource includes 4 IRBs (i.e. N₅= 4) which are IRB 0, IRB 1, IRB 2 and IRB 3. The transmission resource of a PSFCH corresponding to the PSSCH transmitted on IRB 0 in PSSCH slot 7 includes IRB 0 in PSFCH slot 12, the transmission resource of a PSFCH corresponding to the PSSCH transmitted on IRB 1 in PSSCH slot 7 includes IRB 1 in PSFCH slot 12, transmission resource of a PSFCH corresponding to the PSSCH transmitted on IRB 0 in PSSCH slot 8 includes IRB 2 in PSFCH slot 12, transmission resource of a PSFCH corresponding to the PSSCH transmitted on IRB 1 in PSSCH slot 8 includes an IRB 3 in a PSFCH slot 12, transmission resource of a PSFCH corresponding to the PSSCH transmitted on IRB 0 in PSSCH slot 9 includes IRB 0 in PSFCH slot 12, transmission resource of a PSFCH corresponding to the PSSCH transmitted on IRB 1 in PSSCH slot 9 includes IRB 1 in PSFCH slot 12, transmission resource of a PSFCH corresponding to the PSSCH transmitted on IRB 0 in PSSCH slot 10 includes IRB 2 in PSFCH slot 12, transmission resource of a PSFCH corresponding to the PSSCH transmitted on IRB 1 in PSSCH slot 10 includes IRB 3 in PSFCH slot 12. In this case, the first terminal device can determine the number of code domain resources in the first code domain resource set according to the period of the PSFCH, the number N₄ of IRBs in the PSSCH resource pool, the number N₅ of IRBs comprised in the PSFCH slot. Exemplarily, the number of code domain resources in the first code domain resource set may be K₂× N_{CS1}/P, where K₂=N₄/N₅.

It is assumed that N_{CS1}= 24, and an index range of the code domain resources includes [0, 23], P=4, K₂= 2, N_{CS2}= 12. That is, one IRB of the PSSCH slot corresponds to 12 code domain resources in the PSFCH slot. For example, IRB 0 in PSSCH slot 7 corresponds to code domain resources [0, 11] of IRB 0 in the PSFCH slot 12, IRB 1 in PSSCH slot 7 corresponds to code domain resources [0, 11] of IRB 1 in the PSFCH slot 12, IRB 0 in PSSCH slot 8 corresponds to code domain resources [0, 11] of IRB 2 in the PSFCH slot 12, IRB 1 in PSSCH slot 8 corresponds to code domain resources [0, 11] of IRB 3 in the PSFCH slot 12, IRB 0 in PSSCH slot 9 corresponds to code domain resources [12, 23] of IRB 0 in the PSFCH slot 12, IRB 1 in PSSCH slot 9 corresponds to code domain resources [12, 23] of IRB 1 in the PSFCH slot 12, IRB 0 in PSSCH slot 10 corresponds to code domain resources [12, 23] of IRB 2 in the PSFCH slot 12, and IRB 1 in PSSCH slot 10 corresponds to code domain resources [12, 23] of IRB 3 in the PSFCH slot 12, It can be seen that the PSFCH corresponding to the PSSCH transmitted on the IRB in slot 7 and the PSSCH transmitted on the IRB in slot 8 correspond to different IRBs in slot 12, that is, frequency division multiplexing is performed. The PSFCH corresponding to the PSSCH transmitted on the IRB in slot 9 and the PSSCH transmitted on the IRB in slot 10 correspond to different IRBs in slot 12, that is, frequency division multiplexing is performed. The PSFCH corresponding to the PSSCH transmitted on the IRB in slot 7 and the PSSCH transmitted on the IRB in slot 9 correspond to the same IRB in slot 12, but different code domain resources, that is, code division multiplexing is performed. The PSFCH corresponding to the PSSCH transmitted on the IRB in slot 8 and the PSSCH transmitted on the IRB in slot 10 correspond to the same IRB in slot 12, but different code domain resources, that is, code division multiplexing is performed.

It should be noted that, in the embodiment of the present disclosure, IRB Y in PSSCH slot X corresponds to code domain resources [A, B] of IRB Q in PSFCH slot Z, which represents the available transmission resources of the PSFCH corresponding to the PSSCH transmitted on IRB Y in PSSCH slot X include IRB Q in PSFCH slot Z, and the available code domain resources of the PSFCH include code domain resources in code domain resource set [A, B], where X and Z represent an index of a slot, Y,and Q represent an index of an IRB, A and B represent an index of the code domain resource.

In some embodiments, the method 200 may further include an operation as follows.

The first code domain resource set is determined. Tthe first code domain resource set is determined according to the second slot.

Exemplarily, the number of code domain resources in the first code domain resource set is determined based on the number of code domain resources avaialble within an IRB. For example, the number of code domain resources in the first code domain resource set is determined based on the number of code domain resources avaialble within one second IRB of the at least one second IRB.

Exemplarily, the number of code domain resources in the first code domain resource set is proportional to the number of code domain resources avaialble within one second IRB. For example, the number of code domain resources corresponding to the first PSSCH within one of the at least one second IRB increases with an increase of the number of code domain resources avaialble within the one second IRB. For another example, the number of code domain resources corresponding to the first PSSCH in the second IRB of the at least one second IRB decreases with a decrease of the the number of code domain resources avaialble in the second IRB.

In some embodiments, index information corresponding to code domain resources in the first code domain resource set is determined based on at least one of the index of the second slot; the IRB information of the at least one first IRB; the number of code domain resources in the first code domain resource set; or the information of code domain resources available within one IRB.

Optionally, the IRB information of the at least one first IRB includes at least one of the index information of the first one of the first IRB occupied by the first PSSCH; the number of IRBs in the first IRB occupied by the first PSSCH; or the index information of all of the first IRBs occupied by the first PSSCH.

It should be noted that the information of code domain resources available within one IRB can be understood as the information of code domain resources available in the second IRB. Optionally, the information of code domain resources may be index information of the code domain resources, such as an index number or an index value.

As an example, the first terminal device may group the code domain resources available in the one IRB according to the period of the PSFCH, and determine the index information corresponding to the code domain resources in the first code domain resource set in the grouping process. The code domain resources in each group correspond to one of the P PSSCH slots associated with the PSFCH slot, respectively.

For example, the first terminal device can determine the index information corresponding to the code domain resources in the first code domain resource set according to the following formula:
$R = \left[0, 1, …, {N}_{CS 2}-1\right] + {p}_{+} {N}_{CS 2} ;$ or
$R = \left[0, 1, …, \left({N}_{CS 2}-1\right) P\right] + p ;$

R represents an index of a code domain resource included in the first code domain resource set, and N_{CS2} represents the number of code domain resources in the first code domain resource set, p represents the index of the second slot, a value range of p is 0, 1, ..., P-1, and P represents the period of the PSFCH. In other words, p represents the p-th PSSCH slot among P PSSCH slots corresponding to a PSFCH slot. In practical, in other alternative embodiments, the value range of P may also be 1, 2, ..., P, which is not specifically limited in the present disclosure.

For example, the first terminal device may determine index information corresponding to code domain resources in the first code domain resource set according to the period of the PSFCH and the IRB information of the at least one first IRB.

For example, the first terminal device can determine the index information corresponding to the code domain resources in the first code domain resource set according to the following formula:
$R = f \left(P, {Index}_{IRB}, p, {N}_{CS 2}\right) ;$

R represents an index of a code domain resource in the first code domain resource set, and N_{CS2} represents the number of code domain resources in the first code domain resource set, p represents an index of the second slot, a value range of p is 0, 1, ..., P-1, and P represents the period of the PSFCH. Alternatively, p represents the p-th PSSCH slot among P PSSCH slots corresponding to a PSFCH slot. In practical, in other alternative embodiments, the value range of p may also be 1, 2, ..., P, which is not limited in the present disclosure. Index_{IRB} represents index information determined according to the at least one first IRB.

With reference to Fig. 16, the period P of PSFCH is equal to 4, the PSSCH resource pool includes 4 IRBs, and the PSFCH slot includes 2 IRBs, K₁= 2, that is, two IRBs in the PSSCH slot correspond to one IRB in the PSFCH slot. If the number N_{CS1} of code domain resources available in one IRB in a PSFCH slot is 24, and an index range of of code domain resources includes [0, 23], the number of code domain resources corresponding to one IRB of a PSSCH slot may be determined according to the period of PSFCH, that is, N_{CS2}= 3, that is, one IRB of one PSSCH slot corresponds to three code domain resources in the PSFCH slot. For example, IRB 0 in PSSCH slot 7 corresponds to code domain resources [0, 2] of IRB 0 in a PSFCH slot, and IRB 1 in PSSCH slot 7 corresponds to code domain resources [3, 5] of IRB 0 in a PSFCH slot; IRB 0 in PSSCH slot 8 corresponds to code domain resources [6, 8] of IRB 0 in a PSFCH slot, IRB 1 in PSSCH slot 8 corresponds to code domain resources [9, 11] of IRB 0 in a PSFCH slot; IRB 0 in PSSCH slot 9 corresponds to code domain resources [12, 14] of IRB 0 in PSFCH slot, and IRB 1 in PSSCH slot 9 corresponds to code domain resources [15, 17] of IRB 0 in a PSFCH slot; IRB 0 in PSSCH slot 10 corresponds to code domain resources [18, 20] of IRB 0 in a PSFCH slot, and IRB 1 in PSSCH slot 10 corresponds to code domain resources [21, 23] of IRB 0 in a PSFCH slot. Similarly, IRB 2 in PSSCH slot 7 corresponds to code domain resources [0, 2] of IRB 1 in a PSFCH slot, and IRB 3 in PSSCH slot 7 corresponds to code domain resources [3, 5] of IRB 1 in a PSFCH slot; IRB 2 of in PSSCH slot 8 corresponds to code domain resources [6, 8] of IRB 1 in a PSFCH slot, IRB 3 in PSSCH slot 8 corresponds to code domain resources [9, 11] of IRB 1 in a PSFCH slot; IRB 2 in PSSCH slot 9 corresponds to code domain resources [12, 14] of IRB 1 in a PSFCH slot, and IRB 3 in PSSCH slot 9 corresponds to code domain resources [15, 17] of IRB 1 in a PSFCH slot; IRB 2 in PSSCH slot 10 corresponds to code domain resources [18, 20] of IRB 1 in a PSFCH slot, and IRB 3 in PSSCH slot 10 corresponds to code domain resources [21, 23] of IRB 1 in a PSFCH slot. Further, index information corresponding to the code domain resources in the first code domain resource set is determined according to information of the first IRB occupied by the first PSSCH. For example, if the first IRB occupied by the first PSSCH includes IRB 0 in slot 7, index information of the code domain resources in the first code domain resource set corresponding to the first IRB is [0, 2]. If the first IRB occupied by the first PSSCH includes IRB 1 in slot 7, index information of the code domain resources in the first code domain resource set corresponding to the first IRB is [3, 5]. If the first IRB occupied by the first PSSCH includes IRB 0 and IRB 1 in slot 7, the index information of the code domain resources in the first code domain resource set corresponding to the first IRB is [0, 5]. If the first IRB occupied by the first PSSCH includes IRB 1 and IRB 2 in slot 7, the index information of the code domain resources in the first code domain resource set corresponding to the first IRB includes code domain resources [3, 5] of IRB 0 and code domain resources [0, 2] of IRB 1 in the PSFCH slot.

It should be noted that, in the embodiment of the present disclosure, IRB Y in PSSCH slot X corresponds to code domain resources [A, B] of IRB Z in the PSFCH slot, which represents that available transmission resources of a PSFCH corresponding to the PSSCH transmitted on IRB Y in PSSCH slot X include IRB Z in a PSFCH slot, and available code domain resources of the PSFCH include code domain resources in code domain resource set [A, B]. X represents an index of a slot, Y and Z represent an index of an IRB, A and B represent an index of a code domain resource.

In some embodiments, the method 200 may further include an operation as follows.

The information of code domain resources avaialble in one IRB is determined according to pre-configuration information or network configuration information.

In other words, information of code domain resources avaialble in one IRB is configured according to pre-configuration information or network configuration information. For example, the first terminal device can obtain the information of code domain resources avaialble by the one IRB according to the pre-configuration information or resource pool configuration information in the network configuration information.

For example, information indicating a cyclic shift pair avaialble by one IRB may be included in the resource pool configuration information, which may represent information of code domain resources avaialble by the one IRB.

In some embodiments, the method 200 may further include operations as follows.

Correspondences between index information of the code domain resources and the code domain resources are obtained, and the correspondences are predefined, pre-configured or configured by a network.

The code domain resources in the first code domain resource set are determined according to the index information of the code domain resources in the first code domain resource set and the correspondences.

For example, the correspondences in the present disclosure may include at least one code domain resource, index information of each of the at least one code domain resource, and a number of code domain resources avaialble within one IRB.

Optionally, the code domain resource may be represented by a cyclic shift pair. Optionally, the index information of the code domain resource may also be referred to as an index of the cyclic shift pair. Optionally, the number of code domain resources avaialble within one IRB can also be understood as the number of cyclic shift pairs avaialble within one **IRB.**

Optionally, a first code domain resource in the first code domain resource set includes a first cyclic shift pair, and a first cyclic shift value in the first cyclic shift pair is determined based on index information of the first code domain resource, and a second cyclic shift value in the first cyclic shift pair determined based on the first cyclic shift value and a maximum number of cyclic shift pairs avaialble within one IRB. The maximum number of cyclic shift pairs avaialble within an IRB is determined based on a maximum number of code domain resources avaialble within one IRB.

For example, the maximum number of cyclic shift pairs avaialble within one IRB is equal to the maximum number of code domain resources avaialble within one IRB. In some embodiments, the maximum number of cyclic shift pairs avaialble within the one IRB is determined based on predefined, pre-configured information, or network configuration information. In some embodiments, the maximum number of code domain resources avaialble within the one IRB is determined based on predefined, pre-configured information, or network configuration information.

Optionally, a first cyclic shift value in the first cyclic shift pair is used for determining a negative acknowledgement NACK sequence corresponding to the first PSSCH, and a second cyclic shift value in the first cyclic shift pair is used for determining an acknowledgement ACK sequence corresponding to the first PSSCH. In practical, in other alternative embodiments, the first cyclic shift value may be used to determine the acknowledgement ACK sequence corresponding to the first PSSCH, and the second cyclic shift value may be used to determine the negative acknowledgement NACK sequence corresponding to the first PSSCH, which is not limited in the present disclosure.

In the embodiment, because the sidelink feedback information is carried by the sequence, different sequences can be generated by different cyclic shift values. In other words, if the ACK sequence and the NACK sequence respectively correspond to different sequences, the ACK sequence and the NACK sequence correspond to different cyclic shift values. Therefore, a cyclic shift pair including two cyclic shift values may be determined as a code domain resource, that is, an ACK sequence and a NACK sequence can be generated respectively according to the two cyclic shift values included in a code domain resource.

It should be noted that the first code domain resource can be any code domain resource in the first code domain resource set. In other words, the code domain resources avaialble by one IRB includes the first code domain resource. Correspondingly, the information of code domain resources avaialble by one IRB includes index information of the first code domain resource. Optionally, index information of the first code domain resource may be an index value or an index number of the first code domain resource.

In some embodiments, the operation that the first cyclic shift value in the first cyclic shift pair is determined based on index information of the first code domain resource includes an operation that the first cyclic shift value is determined according to the index information of the first code domain resource and a number of code domain resources avaialble in one IRB.

For example, the first terminal device may determine a value m0 corresponding to the first cyclic shift value according to the index information of the first code domain resource and the number of code domain resources avaialble in the one IRB, and determine the first cyclic shift value based on the value m0 corresponding to the first cyclic shift value. Further, the first terminal device may determine a value m1 corresponding to the second cyclic shift value according to the value m0 corresponding to the first cyclic shift value and the maximum number of cyclic shift pairs avaialble in one IRB, and determine the second cyclic shift value based on the value m1 corresponding to the second cyclic shift value. For example, the first terminal device may determine the sum of the first cyclic shift value and the maximum number of cyclic shift pairs avaialble within the one IRB as a value m1 corresponding to the second cyclic shift value. In other words, the value m1 corresponding to the second cyclic shift value may be equal to m0 + N_{CS, total}. N_{CS, total} represents the maximum number of cyclic shift pairs avaialble within the one IRB. Optionally, the number of code domain resources avaialble within one IRB is N_{CS1}, NCS1 is less than or equal to N_{CS, total}.

In other alternative embodiments, the first cyclic shift value is determined based on index information of the first code domain resource and the number of cyclic shift pairs avaialble by the one IRB. Optionally, the number of cyclic shift pairs avaialble within the one IRB is determined based on the number of code domain resources avaialble within the IRB. Exemplarily, the number of cyclic shift pairs avaialble within the one IRB is equal to the number of code domain resources avaialble within the one IRB.

For example, if one IRB includes 4 PRBs, and when one IRB carries a PSFCH channel, the PSFCH corresponds to a sequence in a length 48, which indicates that at most 48 cyclic shift values are avaialble within one IRB, that is at most 24 cyclic shift pairs may correspond to one IRB, i.e. N_{CS, total}= 24. The number of code domain resources avaialble in one IRB is obtained according to pre-configuration information or network configuration information.

An implementation of determining m0 corresponding to the first cyclic shift is described below in connection with indexes of code domain resources shown in Table 1 and the number of cyclic shift pairs avaialble within one IRB.

**Table 1 Correspondences between indexes of code domain resources and the code domain resources**

| N_{CS1} | m0 | | | | | | | |
|---|---|---|---|---|---|---|---|---|
| | Index 0 | Index 1 | Index 2 | Index 3 | Index 4 | Index 5 | Index 6 | Index 7 |
| 1 | 0 | - | - | - | - | - | - | - |
| 2 | 0 | 12 | - | - | - | - | - | - |
| 3 | 0 | 8 | 16 | - | - | - | - | - |
| 6 | 0 | 4 | 8 | 12 | 16 | 20 | - | - |
| 8 | 0 | 3 | 6 | 9 | 12 | 15 | 18 | 21 |

As shown in Table 1, it is assumed that N_{CS, total} is 24, when the number N_{CS1} of cyclic shift pairs avaialble in one IRB is equal to 6, that is, a total of 6 cyclic shift pairs are contained in one IRB. In a first cyclic shift pair included in a code domain resource with an index value 2, m0 corresponding to a first cyclic shift value is 8, and m1 corresponding to a second cyclic shift value is 8+24=32.

As an example, as shown in Fig. 15, it is assumed that the period of the PSFCH is 4 slots, i.e. P=4, and the minimum time interval between the PSSCH and a PSFCH associated with the PSSCH is 2 slots. For example, the PSSCH transmission resources include slots 7 to 10 in time domain and IRB 0 to IRB 3 in frequency domain, and the PSFCH transmission resources include IRB 0 to IRB 3 in slot 12. That is, the PSFCH corresponding to the PSSCH transmitted in slot 7 to slot 10 is transmitted in slot 12. In this case, if N_{CS, total}= 24, N_{CS1}=8 is configured by a network configuration, N_{CS2}= 2 (i.e. N_{CS2}= N_{CS1}/P=8/4=2), and the indexes of the code domain resources in the code domain resource set corresponding to each slot of the four PSSCH slots associated with the PSFCH slot and m0 corresponding to the indexes are determined according to the formula R= [0, 1, ..., N_{CS2-1}] + p·N_{CS} as follows.

The indexes of code domain resources in the code domain resource set corresponding to the first PSSCH slot are 0, 1, and the value m0 corresponding to the indexes is 0, 3.

The indexes of code domain resources in the code domain resource set corresponding to the second PSSCH slot are 2, 3, and the value m0 corresponding to the indexes is 6, 9.

The indexes of code domain resources in the code domain resource set corresponding to the third PSSCH slot are 4, 5, and the value m0 corresponding to the indexes is 12, 15.

The indexes of code domain resources in the code domain resource set corresponding to the fourth PSSCH slot are 6, 7, and the value m0 corresponding to the indexes is 18, 21.

As another example, as shown in Fig. 15, it is assembled that the period of the PSFCH is 4 slots, i.e. P=4, and the minimum time interval between the PSSCH and the PSFCH associated with the PSSCH is 2 slots. As an example, the PSSCH transmission resources include slots 7 to 10 in time domain and IRB 0 to IRB 3 in frequency domain. The PSFCH transmission resources include IRB 0 to IRB 3 in slot 12. That is, the PSFCHs corresponding to the PSSCHs transmitted in slot 7 to slot 10 are all transmitted in slot 12. In this case, if N_{CS, total}= 24, N_{CS1}=8 is configured by network configuration, N_{CS2}= 2 (i.e. N_{CS2}=N_{CS1}/P=8/4=2), the indexes of the code domain resources in the code domain resource set corresponding to each slot of the four PSSCH slots associated with the PSFCH slot and m0 corresponding to the indexes are determined according to the formula R= [0, 1, ..., (N_{CS2}-1) ·P] + p.

The indexes of code domain resources in the code domain resource set corresponding to the first PSSCH slot are 0, 4, and the value m0 corresponding to the indexes is 0, 12.

The indexes of code domain resources in the code domain resource set corresponding to the second PSSCH slot are 1, 5, and the value m0 corresponding to the indexes is 3, 15.

The indexes of code domain resources in the code domain resource set corresponding to the third PSSCH slot are 2, 6, and the value m0 corresponding to the indexes is 6, 18.

The indexes of code domain resources in the code domain resource set corresponding to the fourth PSSCH slot are 3, 7, and the value m0 corresponding to the indexes is 9, 21.

With reference to Fig. 15, it is assumed that the period of the PSFCH is 4 slots, i.e. P=4, and the minimum time interval between the PSSCH and the PSFCH associated with the PSSCH is 2 slots. As an example, the PSSCH transmission resources include slots 7 to 10 in time domain and IRB 0 to IRB 3 in frequency domain. The PSFCH transmission resources include IRB 0 to IRB 3 in slot 12. That is, PSFCHs corresponding to the PSSCHs transmitted in slot 7 to slot 10 are all transmitted in slot 12. In this case, if N_{CS, total}= 24, N_{CS1}=8 is configured by network configuration, N_{CS2}= 2 (i.e. N_{CS2}=N_{CS1}/P=8/4=2), i.e. one PSSCH slot corresponds to two code domain resources in the PSFCH slot, each code domain resource of the two code domain resources includes a first cyclic shift value and a second cyclic shift value. For the PSSCH (i.e. the PSSCH transmitted in slot 7) transmitted in the first PSSCH slot within the period of the PSFCH, the indexes of the two code domain resources in the transmission resources of the PSFCH corresponding to the PSSCH are determined according to the formula R= [0, 1, ..., N_{CS2}-1] + p·N_{CS}, which are Index 0 and Index 1 respectively. As shown in Table 1 above, due to N_{CS1}= 8, m0 corresponding to the two first cyclic shift values included in the two code domain resources are 0 and 3 respectively. In addition, m1 corresponding to the two second cyclic shift values included in the two code domain resources is m0+24, that is, m1 corresponding to the two second cyclic shift values included in the two code domain resources is 24 and 27 respectively.

It should be noted that the implementation mode in which the first terminal device determines a sequence based on the cyclic shift value is not limited in the present disclosure. For example, a negative acknowledgement NACK sequence corresponding to the first PSSCH or an acknowledgement ACK sequence corresponding to the first PSSCH may be determined in the following manner:
$x \left(n\right) = {r}_{u , v}^{α , δ} \left(n\right) ;$
$n = 0 , 1 , … , {N}_{RB}^{IRB} ⋅ {N}_{sc}^{RB} - 1 ;$${N}_{RB}^{IRB}$ represents the number of PRBs in one IRB, ${N}_{sc}^{RB}$ indicates the number of subcarriers in a PRB, α represents a cyclic shift, and α is determined according to the first cyclic shift value m0 or the second cyclic shift value m1 of the cyclic shift pair.

In some embodiments, the method 200 may further include an operation as follows.

A transmission resource of the first PSFCH is determined in the first transmission resource subset based on the identity of the first terminal device and/or the identity of the second terminal device. The second terminal device is a terminal device for transmitting the first PSSCH.

In other words, the first terminal device may determine transmission resources of the first PSFCH in a first transmission resource subset available for transmitting the first PSFCH based on an identity of a transmitting end of the first PSFCH and an identity of a receiving end of the first PSFCH.

Optionally, an index of the transmission resource of the first PSFCH is determined in the first transmission resource subset according to the following formula.$S = \left({P}_{ID}+{M}_{ID}\right) mod {N}_{total}$

S represents an index of the transmission resource of the first PSFCH, P_{ID} represents an identity of the second terminal device, M_{ID} represents an identity of the first terminal device, Nₜₒₜₐₗ represents the number of PSFCH transmission resources included in the first transmission resource subset, and mod represents a modulo operation.

In some embodiments, the identity of the first terminal device is determined based on a member an identity of the first terminal device within a communication group; or the identity of the first terminal device is 0. Exemplarily, the identity of the first terminal device is a member an identity of the first terminal device within a communication group.

For example, for multicast communication, and the first terminal device feeds back an ACK or NACK, the identity of the first terminal device is determined according to a member identity (ID) of the first terminal device within a communication group. For multicast communication, and the first terminal device feeds back only the NACK (i.e. NACK-only feedback mode), the identity of the first terminal device is 0. For unicast communication, the identity of the first terminal device is 0. In practical, in another alternative embodiment, the identity of the first terminal device may also be set as other value which are not limited in present disclosure.

In some embodiments, the identity of the second terminal device is determined according to source identity information carried in the sidelink control information SCI corresponding to the first PSSCH. For example, the identity of the second terminal device is the source identity information carried in the sidelink control information SCI corresponding to the first PSSCH.

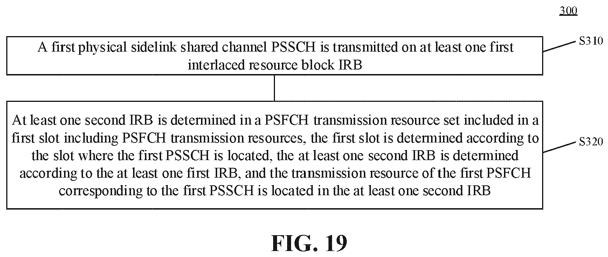

Fig. 19 is a schematic flowchart of a wireless communication method 300 provided by an embodiment of the present disclosure. The method 300 may be executed by a second terminal device. The second terminal device may be a transmitter for transmitting a PSSCH. For example, the second terminal device may be the above-mentioned terminal B, and the second terminal device may also be the above-mentioned terminal A.

As shown in Fig. 19, the method 300 may include operations S310 and S320.

At S310, a first physical sidelink shared channel PSSCH is transmitted on at least one first interlaced resource block IRB.

At S320, at least one second IRB is determined in a PSFCH transmission resource set included in a first slot including a transmission resource of a physical sidelink feedback channel PSFCH. The first slot is determined according to a second slot where the first PSSCH is located, the at least one second IRB is determined according to the at least one first IRB, and a transmission resource of a first PSFCH corresponding to the first PSSCH is located in the at least one second IRB.

In some embodiments, the method 300 may further include opefrations as follows.

A first transmission resource subset available for transmitting the first PSFCH is determined in the PSFCH transmission resource set. The first transmission resource subset includes Nₜₒₜₐₗ PSFCH transmission resources. The Nₜₒₜₐₗ PSFCH transmission resources are determined based on a first number and the number of IRBs in the at least one second IRB. The number of IRBs in the first transmission resource subset is equal to the number of IRBs included in the at least one second IRB, and the first number is determined based on the number of code domain resources in a first code domain resource set.

In some embodiments, the PSFCH transmission resources in the first transmission resource subset are indexed first in an order of frequency domain and second in an order of code domain.

In some embodiments, the method 300 may further include an operation as follows.

The at least one second IRB is determined in the PSFCH transmission resource set based on IRB information of the at least one first IRB.

In some embodiments, the IRB information of the at least one first IRB includes at least one of index information of the first one in the at least one first IRB; the number of IRBs in the at least one first IRB; or index information of all first IRBs in the at least one first IRB.

In some embodiments, the method 300 may further include an operation as follows.

The first code domain resource set is determined based on at least one of the number of code domain resources available within one IRB; a period of a PSFCH; an index of the second slot; the number of IRBs in a PSSCH resource pool; the number of IRBs in a PSFCH slot; or information of code domain resources available in one IRB.

In some embodiments, the number of code domain resources in the first code domain resource set is determined based on the number of code domain resources available within one IRB, the period of the PSFCH, the number of IRBs in the PSSCH resource pool and the number of IRBs included in the PSFCH slot.

In some embodiments, the number of code domain resources in the first code domain resource set is represented as (N_{CS1}/(P × K)). N_{CS1} represents the number of code domain resources available within one IRB, P represents the period of the PSFCH, K is determined based on N₄ and N₅, N₄ indicates the number of IRBs included in PSSCH resource pool, and N₅ indicates the number of IRBs included in the PSFCH slot.

In some embodiments, K=max (1, N₄/N₅).

In some embodiments, the method 300 may further include an operation as follows.

Index information corresponding to code domain resources in the first code domain resource set is determined based on at least one of the index of the second slot, the IRB information of the at least one first IRB, the number of code domain resources in the first code domain resource set or the information of code domain resources available by one IRB.

In some embodiments, the method 300 may further include an operation as follows.

The information of code domain resources available by one IRB is determined according to pre-configuration information or network configuration information.

In some embodiments, the method 300 may further include an operation as follows.

Correspondences between index information of the code domain resources and the code domain resources are obtained. The correspondences are predefined, pre-configured or configured by a network.

The code domain resources in the first code domain resource set are determined according to index information of the code domain resources in the first code domain resource set and the correspondences.

In some embodiments, a first code domain resource in the first code domain resource set includes a first cyclic shift pair, a first cyclic shift value in the first cyclic shift pair is determined based on index information of the first code domain resource, and a second cyclic shift value in the first cyclic shift pair is determined based on the first cyclic shift value and a maximum number of cyclic shift pairs available within one IRB. The maximum number of cyclic shift pairs available within one IRB is determined based on a maximum number of code domain resources available within one IRB.

In some embodiments, the operation that the first cyclic shift value in the first cyclic shift pair is determined based on index information of the first code domain resource comprises an operation as follows.

The first cyclic shift value is determined according to the index information of the first code domain resource and the number of code domain resources available by one IRB.

In some embodiments, the first cyclic shift value in the first cyclic shift pair is used to determine a negative acknowledgement NACK sequence corresponding to the first PSSCH, and the second cyclic shift value in the first cyclic shift pair is used to determine an acknowledgement ACK sequence corresponding to the first PSSCH.

In some embodiments, the method 300 may further include an operation as follows.

A transmission resource of the first PSFCH is determined in the first transmission resource subset based on the identity of the first terminal device and/or the identity of a second terminal device.

In some embodiments, an index of the transmission resource of the first PSFCH is determined in the first transmission resource subset according to the following formula:
$S = \left({P}_{ID}+{M}_{ID}\right) mod {N}_{total}$

S represents an index of a transmission resource of the first PSFCH, P_{ID} represents an identity of the second terminal device, M_{ID} represents an identity of the first terminal device, Nₜₒₜₐₗ represents the number of PSFCH transmission resources included in the first transmission resource subset, and mod represents a modulo operation.

In some embodiments, the identity of the first terminal device is determined based on a member identity of the first terminal device in a communication group, or the identity of the first terminal device is 0.

In some embodiments, the identity of the second terminal device is determined according to source identity information carried in sidelink control information SCI corresponding to the first PSSCH.

Further, regarding terms and implementations in the method 300, reference may be made to related solution in the method 200, which are not repeated herein to avoid repetition.

In addition, the method 200 and the method 300 are only examples of the present disclosure, and all or a part of the operations in the method 200 or 300 may be included in a process of determining at least one second IRB, and one or more of the above-mentioned operations may be combined into one operation, which is not limited by the present disclosure.

It should be understood that in various method embodiments of the present disclosure, the slot may represent a logical slot within a resource pool, and the IRB resource may represent an IRB resource within a resource pool.

Preferred embodiments of the present disclosure have been described above in detail with reference to the drawings, but the present disclosure is not limited to the specific details of the above embodiments. For example, the technical features described in the above embodiments may be combined in any suitable manner without conflict, and various possible combinations are not further described in the present disclosure in order to avoid unnecessary repetition. For example, a combination may be made between the various embodiments of the present disclosure so long as the combination does not depart from the scope of the appended claims.

It should also be understood that in the various method embodiments of the present disclosure, the sequence number of the above-mentioned processes does not define the execution order, and the execution order of the processes should be determined by functions and inherent logic thereof, and should not be constructed as a limit for the implementation process of the embodiments of the present disclosure. Further, in embodiments of the present disclosure, the terms "downlink" and "uplink" are used to denote a transmission direction of the signal or data, where "downlink" indicates that the transmission direction of the signal or data is a first direction transmitted from a station to a user equipment of a cell, and "uplink" indicates that the transmission direction of the signal or data is a second direction transmitted from the user equipment of the cell to the station. For example, "downlink signal" means that the transmission direction of the signal is the first direction. In addition, the term "and/or" in embodiments of the present disclosure merely describes an association relationship of associated objects, indicating that three relationships may exist. Specifically, A and/or B can mean that only A, both A and B, and only B. In addition, the character "/" in the present disclosure generally indicates that the related objects have a "or" relationship

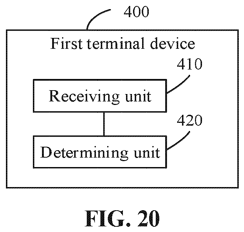

The method embodiments of the present disclosure are described in detail above with reference to the drawings, and the device embodiments of the present disclosure are described in detail below with reference to Figs. 20 to 23.

Fig. 20 is a schematic block diagram of a first terminal device 400 according to an embodiment of the present disclosure.

As shown in Fig. 20, the first terminal device 400 may include a receiving unit 410 and a determining unit 420.

The receiving unit 410 is configured to receive a first physical sidelink shared channel PSSCH on at least one first interlaced resource block IRB.

The determining unit 420 is configured to determine at least one second IRB in a physical sidelink feedback channel PSFCH transmission resource set included in a first slot including PSFCH transmission resources. The first slot is determined according to a second slot in which the first PSSCH is located, the at least one second IRB is determined according to the at least one first IRB, and a transmission resource of a first PSFCH corresponding to the first PSSCH is located in the at least one second IRB.

In some embodiments, the determining unit 420 may be further configured to determine, in the PSFCH transmission resource set, a first transmission resource subset for transmitting the first PSFCH. The first transmission resource subset includes Nₜₒₜₐₗ PSFCH transmission resources, and the Nₜₒₜₐₗ PSFCH transmission resources are determined based on the number of IRBs in the at least one second IRB and the number of code domain resources, corresponding to the first PSSCH, in one second IRB of the at least one second IRB.

In some embodiments, the PSFCH transmission resources in the first transmission resource subset are indexed first in an order of frequency domain and second in an order of code domain.

In some embodiments, the determining unit 420 may be further configured to determine the at least one second IRB in the PSFCH transmission resource set based on IRB information of the at least one first IRB.

In some embodiments, the IRB information of the at least one first IRB includes at least one of index information of the first one of the at least one first IRB, the number of IRBs in the at least one first IRB, or index information of all of the at least one first IRB.

In some embodiments, the determining unit 420 may be configured to determine a first code domain resource set based on at least one of: the number of code domain resources available within one IRB; a period of a PSFCH; an index of the second slot; the number of IRBs in a PSSCH resource pool; the number of IRBs in a PSFCH slot; or information of code domain resources available by one IRB.

In some embodiments, the number of code domain resources in the first code domain resource set is determined based on the number of code domain resources available within one IRB, the period of the PSFCH, the number of IRBs in the PSSCH resource pool and the number of IRBs included in the PSFCH slot.

In some embodiments, the number of code domain resources in the first code domain resource set is (N_{CS1}/(P × K)), where NCS1 represents the number of code domain resources available within one IRB, P represents the period of the PSFCH, K is determined based on N₄ and N₅, N₄ represents the number of IRBs included in PSSCH resource pool, N₅ represents the number of IRBs included in the PSFCH slot.

In some embodiments, K=max (1, N₄/N₅).

In some embodiments, the determining unit 420 may also be configured to determine index information of code domain resources in the first code domain resource set based on at least one of: an index of the second slot; IRB information of the at least one first IRB; the number of code domain resources in the first code domain resource set; or information of code domain resources available by one IRB.

In some embodiments, the receiving unit 410 may also be configured to obtain the information of code domain resources available by one IRB according to pre-configuration information or network configuration information.

In some embodiments, the determining unit 420 may be further configured to obtain correspondences between index information of the code domain resources and the code domain resources. The correspondences are predefined, pre-configured or configured by a network.

The determining unit 420 may be further configured to determine the code domain resource in the first code domain resource set according to the index information of the code domain resources in the first code domain resource set and the correspondences.

In some embodiments, a first code domain resource in the first code domain resource set includes a first cyclic shift pair, a first cyclic shift value in the first cyclic shift pair is determined based on index information of the first code domain resource, and a second cyclic shift value in the first cyclic shift pair is determined based on the first cyclic shift value and a maximum number of cyclic shift pairs available within one IRB. The maximum number of cyclic shift pairs available within one IRB is determined based on a maximum number of code domain resources available within one IRB.

In some embodiments, the operation that the first cyclic shift value in the first cyclic shift pair is determined based on index information of the first code domain resource includes: determining the first cyclic shift value according to the index information of the first code domain resource and the number of code domain resources available by one IRB.

In some embodiments, the first cyclic shift value in the first cyclic shift pair is used to determine a negative acknowledgement NACK sequence corresponding to the first PSSCH, and the second cyclic shift value in the first cyclic shift pair is used to determine an acknowledgement ACK sequence corresponding to the first PSSCH.

In some embodiments, the determining unit 420 may be further configured to determine a transmission resource of the first PSFCH in the first transmission resource subset based on an identity of the first terminal device and/or an identity of a second terminal device.

In some embodiments, the determining unit 420 is configured to determine an index of the transmission resource of the first PSFCH in the first transmission resource subset according to the following formula:
$S = \left({P}_{ID}+{M}_{ID}\right) mod Ntotal ;$

S represents the index of the transmission resource of the first PSFCH, P_{ID} represents the identity of the second terminal device, M_{ID} represents the identity of the first terminal device, Nₜₒₜₐₗ represents the number of PSFCH transmission resources in the first transmission resource subset, and mod represents a modulo operation.

In some embodiments, the identity of the first terminal device is determined based on a member identity of the first terminal device within a communication group, or the identity of the first terminal device is 0.

In some embodiments, the identity of the second terminal device is determined according to source identity information carried in sidelink control information SCI corresponding to the first PSSCH.

It should be understood that device embodiments may correspond to method embodiments, and regarding similar descriptions, reference may be made to method embodiments. In particular, the first terminal device 400 shown in Fig. 20 may correspond to an entity which executes the method 200 or 300 according to the embodiment of the present disclosure, and the above and other operations and/or functions of the respective units in the first terminal device 400 are used for implementing respective flows in the methods in Fig. 13 or Fig. 19, and thus are not repeated here for the sake of brevity.

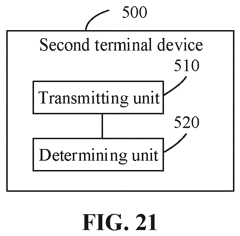

Fig. 21 is a schematic block diagram of a second terminal device 500 according to an embodiment of the present disclosure.

As shown in Fig. 21, the second terminal device 500 may include a transmitting unit 510 and a determining unit 520.

The transmitting unit 510 is configured to receive a first physical sidelink shared channel PSSCH on at least one first interlaced resource block IRB.

The determining unit 520 is configured to determine at least one second IRB in a physical sidelink feedback channel PSFCH transmission resource set in a first slot including PSFCH transmission resources. The first slot is determined according to a second slot in which the first PSSCH is located, the at least one second IRB is determined according to the at least one first IRB, and a transmission resource of a first PSFCH corresponding to the first PSSCH is located in the at least one second IRB.

In some embodiments, the determining unit 520 may be further configured to determine, in the PSFCH transmission resource set, a first transmission resource subset for transmitting the first PSFCH. The first transmission resource subset includes Nₜₒₜₐₗ PSFCH transmission resources, and the Nₜₒₜₐₗ PSFCH transmission resources are determined based on a first number, and the number of IRBs in the at least one second IRB. The number of IRBs included in the first transmission resource subset is equal to the number of IRBs in the at least one second IRB, and the first number is determined based on the number of code domain resources in a first code domain resource set.

In some embodiments, the PSFCH transmission resources in the first transmission resource subset are indexed first in an order of frequency domain and second in an order of code domain.

In some embodiments, the determining unit 520 may be further configured to determine the at least one second IRB in the PSFCH transmission resource set based on IRB information of the at least one first IRB.

In some embodiments, the IRB information of the at least one first IRB includes at least one of index information of the first one of the at least one first IRB, the number of IRBs in the at least one first IRB, or index information of all of the at least one first IRB.

In some embodiments, the determining unit 520 may be further configured to: determine the first code domain resource set based on at least one of: the number of code domain resources available within one IRB; a period of a PSFCH; an index of the second slot; the number of IRBs in a PSSCH resource pool; the number of IRBs in a PSFCH slot; or information of the code domain resources available by one IRB.

In some embodiments, the number of code domain resources in the first code domain resource set is determined based on the number of code domain resources available within one IRB, the period of the PSFCH, the number of IRBs in the PSSCH resource pool and the number of IRBs included in the PSFCH slot.

In some embodiments, the number of code domain resources in the first code domain resource set is (N_{CS1}/(P × K)), where NCS1 represents the number of code domain resources available within one IRB, P represents the period of the PSFCH, K is determined based on N₄ and N₅, N₄ represents the number of IRBs included in PSSCH resource pool, N₅ represents the number of IRBs included in the PSFCH slot.

In some embodiments, K=max (1, N₄/N₅).

In some embodiments, the determining unit 520 may be further configured to determine index information of code domain resources in the first code domain resource set based on at least one of: an index of the second slot; IRB information of the at least one first IRB; the number of code domain resources in the first code domain resource set; or information of code domain resources available by one IRB.

In some embodiments, the information of code domain resources available by one IRB is pre-configuration information or network configuration information.

In some embodiments, the determining unit 520 may be further configured to obtain correspondences between index information of the code domain resources and the code domain resources. The correspondences are predefined, pre-configured or configured by a network.

The determining unit 520 may be further configured to determine the code domain resource in the first code domain resource set according to the index information of the code domain resources in the first code domain resource set and the correspondences.

In some embodiments, a first code domain resource in the first code domain resource set includes a first cyclic shift pair, a first cyclic shift value in the first cyclic shift pair is determined based on index information of the first code domain resource, and a second cyclic shift value in the first cyclic shift pair is determined based on the first cyclic shift value and a maximum number of cyclic shift pairs available within one IRB. The maximum number of cyclic shift pairs available within one IRB is determined based on a maximum number of code domain resources available within one IRB.

In some embodiments, the operation that the first cyclic shift value in the first cyclic shift pair is determined based on index information of the first code domain resource includes: determining the first cyclic shift value according to the index information of the first code domain resource and the number of code domain resources available by one IRB.

In some embodiments, the first cyclic shift value in the first cyclic shift pair is used to determine a negative acknowledgement NACK sequence corresponding to the first PSSCH, and the second cyclic shift value in the first cyclic shift pair is used to determine an acknowledgement ACK sequence corresponding to the first PSSCH.

In some embodiments, the determining unit 520 may be further configured to determine a transmission resource of the first PSFCH in the first transmission resource subset based on an identity of the first terminal device and/or an identity of a second terminal device..

In some embodiments, the determining unit 520 is configured to determine an index of the transmission resource of the first PSFCH in the first transmission resource subset according to the following formula:
$S = \left({P}_{ID}+{M}_{ID}\right) mod Ntotal ;$

S represents the index of the transmission resource of the first PSFCH, P_{ID} represents the identity of the second terminal device, M_{ID} represents the identity of the first terminal device, Nₜₒₜₐₗ represents the number of PSFCH transmission resources in the first transmission resource subset, and mod represents a modulo operation.

In some embodiments, the identity of the first terminal device is determined based on a member identity of the first terminal device within a communication group, or the identity of the first terminal device is 0.

In some embodiments, the identity of the second terminal device is determined according to source identity information carried in sidelink control information SCI corresponding to the first PSSCH.

It should be understood that device embodiments may correspond to method embodiments, and regarding similar descriptions, reference may be made to method embodiments. In particular, the second terminal device 500 shown in Fig. 21 may correspond to an entity which executes the method 200 or 300 according to the embodiment of the present disclosure, and the above and other operations and/or functions of the respective units in the second terminal device 500 are used for implementing respective flows in the methods in Fig. 13 or Fig. 19, and thus are not repeated here for the sake of brevity.

The communication device of the embodiment of the present disclosure is described above from the perspective of functional modules with reference to the drawings. It should be understood that the functional modules may be implemented in hardware form, by instructions in software form, or by a combination of hardware and software modules. **In** particular, the operations of the method embodiment in the embodiment of the present disclosure can be implemented by integrated logic circuits in hardware in the processor and/or the instruction in the form of software, and the operations of the method disclosed in combination with the embodiment of the present disclosure can be directly implemented by a decoding processor in hardware or a combination of the hardware and software modules in the decoding processor. Optionally, the software module may be provided in an RAM, a flash memory, a read-only memory, a programmable read-only memory, an electrically erasable programmable memory, a registers and other known storage media in the art. The storage medium is provided in the memory, and the processor reads the information in the memory and implements the operations in the method embodiment in combination with hardware of the memory.

For example, the above-mentioned receiving unit 410 or transmitting unit 510 may be implemented by a transceiver and the above-mentioned determining unit 420 or determining unit 520 may be implemented by a processor.

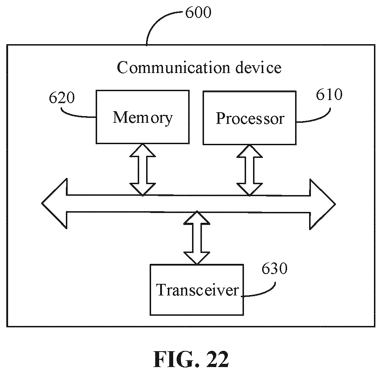

Fig. 22 is a schematic structural diagram of a communication device 600 according to an embodiment of the present disclosure.

As shown in Fig. 22, the communication device 600 may include a processor 610.

The processor 610 may invoke and run a computer program from a memory to implement the method in embodiments of the present disclosure.

As shown in Fig. 22, the communication device 600 may further include a memory 620.

The memory 620 may be configured to store indication information and may also be configured to store codes, instructions and the like executed by the processor 610. The processor 610 may invoke and run a computer program from the memory 620 to implement the method in embodiments of the present disclosure. The memory 620 may be a separate device independent of processor 610 or may be integrated within processor 610.

As shown in Fig. 22 the communication device 600 may further include a transceiver 630.

The processor 610 may control the transceiver 630 to communicate with other devices. In particular, the processor may control the transceiver to transmit information or data to another device, or receive information or data transmitted by another device. The transceiver 630 may include a transmitter and a receiver. The transceiver 630 may further include antennas, the number of which may be one or more.

It should be understood that the various components in the communication device 600 are connected by a bus system including a power bus, a control bus and a status signal bus in addition to a data bus.

It should also be understood that the communication device 600 may be the first terminal device of the embodiment of the present disclosure, and the communication device 600 may implement the flows implemented by the first terminal device in the respective methods of the embodiment of the present disclosure, that is, the communication device 600 of the embodiment of the present disclosure may correspond to the first terminal device 400 in the embodiment of the present disclosure, and may correspond to the entities for executing the method 200 or 300 according to the embodiment of the present disclosure, which is not repeated here for the sake of brevity. Similarly, the communication device 600 may be a second terminal device of an embodiment of the present disclosure and the communication device 600 may implement flows implemented by the second terminal device in various methods of the embodiment of the present disclosure. That is, the communication devcie 600 of the embodiment of the present disclosure may correspond to the second terminal device 500 in the embodiment of the present disclosure and may correspond to the entities for executing the method 200 or 300 according to the embodiment of the present disclosure, which is not repeated here for the sake of brevity.

In addition, the embodiment of the present disclosure further provides a chip.

For example the chip may be an integrated circuit chip having signal processing capabilities that can implement or execute the methods, the oeprations and logic diagrams disclosed in embodiments of the present disclosure. The chip may also be referred to as a system level chip, a system chip, a chip system, or a system-on-chip or the like. Optionally, the chip may be applied to various communication devices, so that the communication devices mounted with the chip can execute the methods, operations and logic block diagrams disclosed in embodiments of the present disclosure.

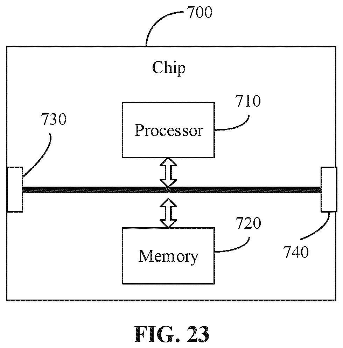

Fig. 23 is a schematic structural diagram of a chip 700 according to an embodiment of the present disclosure.

As shown in Fig. 23, the chip 700 includes a processor 710.

The processor 710 may invoke and run a computer program from a memory to implement the method in embodiments of the present disclosure.

As shown in Fig. 23, the chip 700 may further include a memory 720.

The processor 710 may invoke and run a computer program from the memory 720 to implement the method in embodiments of the present disclosure. The memory 720 may be configured to store indication information and may also be configured to store codes, instructions and the like which is executed by the processor 710. The memory 720 may be a separate device independent of the processor 710 or may be integrated within the processor 710.

As shown in Fig. 23, the chip 700 may further include an input interface 730.

The processor 710 may control the input interface 730 to communicate with other devices or chips, for obtaining information or data sent by other devices or chips.

As shown in Fig. 23, the chip 700 may further include an output interface 740.

The processor 710 may control the output interface 740 to communicate with other devices or chips for outputting information or data to other devices or chips.

It should be understood that the chip 700 may be applied to the first terminal device or the second terminal device in the embodiment of the present disclosure, in other words, the chip may implement the flows implemented by the first terminal device in the respective methods of the embodiment of the present disclosure, and may also implement the flows implemented by the second terminal device in the respective methods of the embodiment of the present disclosure, which is not repeated here for the sake of brevity.

It should also be understood that the various components in the chip 700 are connected by a bus system. The bus system includes not only a data bus, but also a power bus, a control bus and a status signal bus.

The above processors may include, but be not limited to: a general purpose processor, a digital signal processor (DSP), an application specific integrated circuit (ASIC), a field programmable gate array (FPGA) or other programmable logic devices, a discrete gate or a transistor logic device, a discrete hardware component and so on.

The processor may be used to implement or execute the methods, operations, and logic diagrams disclosed in embodiments of the present disclosure. The operations of the method disclosed in combination with the embodiment of the present disclosure can be directly implemented by a decoding processor in hardware or a combination of the hardware and software modules in the decoding processor. Optionally, the software module may be provided in an RAM, a flash memory, a read-only memory, a programmable read-only memory, an electrically erasable programmable memory, a registers and other known storage media in the art. The storage medium is provided in the memory, and the processor reads the information in the memory and implements the operations in the method embodiment in combination with hardware of the memory.

The above memory includes, but is not limited to: a Volatile memory and/or a nonvolatile memory. The nonvolatile memory may be a read-only memory (ROM), a programmable ROM (PROM), an erasable PROM (EPROM), an electrically EPROM (EEPROM), or a flash memory. The volatile memory may be a random access memory (RAM) which serves as an external cache. By way of illustration, but not limitation, many forms of RAMs are available, such as a static random access memory (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It should be noted that the memory described herein is intended to include these and any other suitable types of memory.

The embodiment of the present disclosure further provides a computer readable storage medium for storing computer programs. The computer-readable storage medium stores one or more programs including instructions that, when executed by a portable electronic device including a plurality of application programs, enable the portable electronic device to execute the wireless communication method provided herein.

Optionally, the computer-readable storage medium may be applied to the first terminal device in the embodiment of the present disclosure, and the computer program enables the computer to execute the flows implemented by the first terminal device in the respective methods of the embodiment of the present disclosure, which is not repeated here for the sake of brevity. Optionally, the computer-readable storage medium can be applied to the second terminal device in the embodiment of the present disclosure, and the computer program enables the computer to execute the flows implemented by the second terminal device in the respective methods of the embodiment of the present disclosure, which is not repeated here for the sake of brevity.

The embodiment of the present disclosure further provides a computer program product including a computer program which, when executed by the computer, enables the computer to execute the wireless communication method provided herein.

Optionally, the computer program product may be applied to the first terminal device in the embodiment of the present disclosure, and the computer program enables the computer to execute the flows implemented by the first terminal device in the respective methods of the embodiment of the present disclosure, which is not repeated here for the sake of brevity. Optionally, the computer program product may be applied to the second terminal device in the embodiment of the present disclosure, and the computer program enables the computer to execute the flows implemented by the second terminal device in the respective methods of the embodiment of the present disclosure, which is not repeated here for the sake of brevity.

The embodiment of the present disclosure further provides a computer program which, when executed by the computer, enables the computer to execute the wireless communication method provided herein.

Optionally, the computer program may be applied to the first terminal device in the embodiment of the present disclosure. When the computer program is run on the computer, the computer executes the flowS implemented by the first terminal device in the respective methods of the embodiment of the present disclosure, which is not repeated here for the sake of brevity. Optionally, the computer program may be applied to the second terminal device in the embodiment of the present disclosure, and when the computer program is run on the computer, the computer executes the flows implemented by the second terminal device in the respective methods of the embodiment of the present disclosure, which is not repeated here for the sake of brevity.

The embodiments of the present disclosure further provide a communication system, which may include the first terminal device and the second terminal device described above, and is not be repeated here for the sake of brevity. It should be noted that the term "system" in the present disclosure may also be referred to as "network management architecture" or "network system".

It should also be understood that the terms used in the embodiments of the present disclosure and the appended claims is for the purpose of describing specific embodiments only rather than limiting the embodiments of the present disclosure. For example, the singular forms of "an", "said", "described", and "the" used in embodiments of the present disclosure and the appended claims may also intended to include more than one, unless the context clearly dictates otherwise.

Those skilled in the art will appreciate that the various example units and algorithm operations described in connection with the embodiments disclosed herein may be implemented in electronic hardware or a combination of computer software and electronic hardware. Whether these functions are executed in hardware or software depends on the specific application and design constraints of the technical solution. The skilled person may implement the functions by using different methods for each particular application, but such implementation should not be considered beyond the scope of the embodiments of the present disclosure. If the functions are implemented in the form of a software functional unit and sold or used as an independent product, the functions may be stored in a computer-readable storage medium. Based on this understanding, the technical solutions of the present disclosure substantially or parts making contributions to the conventional art or part of the technical solutions may be embodied in form of a software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

Those skilled in the art may also appreciate that, for convenience and brevity of description, regarding operating processes of the above systems, devices, and units, reference may be made to processes in the foregoing method embodiments, and the operating processes are not be repeated herein. In several embodiments provided herein, it should be understood that the disclosed systems, devices and methods may be implemented in other ways. For example, the division of units or modules or components in the above-described device embodiment is only a logical division partition, which may be implemented in another way. For example, multiple units or modules or components may be combined or integrated into another system, or some units or modules or components may be ignored or not executed. For another example, the units/modules/components described above as separation/display components may or may not be physically separated, i.e. may be located in one place, or may be distributed over a plurality of network elements. Some or all of the units/modules/components may be selected according to actual needs to achieve the object of the embodiment of the present disclosure. Finally, it should be noted that the coupling or direct coupling or communication connection shown or discussed above may be indirect coupling or communication connection through some interface, device or unit, and may be electrical, mechanical or in other form.

The foreging are only the specific implementation mode of the embodiment of the present disclosure, but the protection scope of the embodiment of the present disclosure is not limited thereto. Therefore, the scope of protection of the present disclosure shall be subject to the scope of protection of the claims.

## Claims

1. A wireless communication method, executed by a first terminal device, the method comprising:
receiving, from a second terminal device, a first physical sidelink shared channel, PSSCH, on at least one first interlaced resource block, IRB (S210);
determining at least one second IRB in a physical sidelink feedback channel, PSFCH, transmission resource set comprised in a first slot which comprises PSFCH transmission resources (S220), wherein the first slot is determined according to a second slot in which the first PSSCH is located, the at least one second IRB is determined according to the at least one first IRB, and a transmission resource of a first PSFCH corresponding to the first PSSCH is located in the at least one second IRB; and
transmitting, to the second terminal device, the first PSFCH corresponding to the first PSSCH on the at least one second IRB,
wherein the method further comprises:
determining, in the PSFCH transmission resource set, a first transmission resource subset available for transmitting the first PSFCH, the first transmission resource subset comprising Nₜₒₜₐₗ PSFCH transmission resources, wherein the Nₜₒₜₐₗ PSFCH transmission resources are determined based on a first number and a second number, wherein the first number is determined based on the number of code domain resources comprised in a first code domain resource set, and the second number is the number of IRBs comprised in the at least one second IRB which is equal to the number of IRBs included in the first transmission resource subset; and
determining an index of the transmission resource of the first PSFCH in the first transmission resource subset according to the following formula: $S = \left({P}_{ID}+{M}_{ID}\right) mod {N}_{total} ;$
wherein S represents the index of the transmission resource of the first PSFCH, P_{ID} represents an identity of the second terminal device, M_{ID} represents an identity of the first terminal device, and mod represents a modulo operation.

2. The method according to claim 1, wherein the PSFCH transmission resources in the first transmission resource subset are indexed first in an order of frequency domain and second in an order of code domain.

3. The method according to any one of claims 1 to 2, further comprising:
determining the at least one second IRB in the PSFCH transmission resource set based on IRB information of the at least one first IRB.

4. The method according to claim 3, wherein the IRB information of the at least one first IRB comprises at least one of:
index information of the first one of the at least one first IRB; or
index information of all of the at least one first IRB.

5. The method according to claim3 or 4, wherein the IRB information of the at least one first IRB comprises a number of IRBs in the at least one first IRB.

6. The method according to claim 1, wherein the identity of the first terminal device is determined based on a member identity of the first terminal device within a communication group, or the identity of the first terminal device is 0.

7. The method according to any one of claims 1 to 6, wherein the identity of the second terminal device is determined according to source identity information carried in sidelink control information, SCI, corresponding to the first PSSCH.

8. The method according to claim 1, wherein an IRB included in a PSSCH resource pool has a one-to-many correspondence with IRBs in the first slot, so that the number of IRBs in the first slot is greater than the number of IRBs in the PSSCH resource pool, and the IRB resources of the first PSFCH corresponding to the first PSSCH in the first slot are determined according to information about the slot in which the first PSSCH is located and IRB information of the at least one first IRB.

9. A wireless communication method, executed by a second terminal device, the method comprising:
transmitting, to a first terminal device, a first physical sidelink shared channel, PSSCH, on at least one first interlaced resource block, IRB (S310);
determining at least one second IRB in a physical sidelink feedback channel, PSFCH, transmission resource set comprised in a first slot which comprises PSFCH transmission resources (S320), wherein the first slot is determined according to a second slot in which the first PSSCH is located, the at least one second IRB is determined according to the at least one first IRB, and a transmission resource of a first PSFCH corresponding to the first PSSCH is located in the at least one second IRB; and
receiving, from the first terminal device, the first PSFCH corresponding to the first PSSCH on the at least one second IRB,
wherein the method further comprises:
determining, in the PSFCH transmission resource set, a first transmission resource subset available for transmitting the first PSFCH, the first transmission resource subset comprising Nₜₒₜₐₗ PSFCH transmission resources, wherein the Nₜₒₜₐₗ PSFCH transmission resources are determined based on a first number and a second number, wherein the first number is determined based on the number of code domain resources comprised in a first code domain resource set, and the second number is the number of IRBs comprised in the at least one second IRB which is equal to the number of IRBs included in the first transmission resource subset; and
determining an index of the transmission resource of the first PSFCH in the first transmission resource subset according to the following formula: $S = \left({P}_{ID}+{M}_{ID}\right) mod {N}_{total} ;$
wherein S represents the index of the transmission resource of the first PSFCH, P_{ID} represents an identity of the second terminal device, M_{ID} represents an identity of the first terminal device, and mod represents a modulo operation.

10. The method according to claim 9, wherein the PSFCH transmission resources in the first transmission resource subset are indexed first in an order of frequency domain and second in an order of code domain.

11. The method according to any one of claims 9 to 10, further comprising:
determining the at least one second IRB in the PSFCH transmission resource set based on IRB information of the at least one first IRB.

12. The method according to claim 11, wherein the IRB information of the at least one first IRB comprises a number of IREs in the at least one first IRB.

13. The method according to claim 9, wherein an IRB included in a PSSCH resource pool has a one-to-many correspondence with IRBs in the first slot, so that the number of IRBs in the first slot is greater than the number of IRBs in the PSSCH resource pool, and the IRB resources of the first PSFCH corresponding to the first PSSCH in the first slot are determined according to information about the slot in which the first PSSCH is located and IRB information of the at least one first IRB.

14. A first terminal device, configured to execute the method according to any one of claims 1 to 8.

15. A second terminal device, configured to execute the method according to any one of claims 9 to 13.

## Patentansprüche

1. Drahtloskommunikationsverfahren, ausgeführt durch eine erste Endgerätevorrichtung, wobei das Verfahren Folgendes umfasst:
Empfangen, von einer zweiten Endgerätevorrichtung, eines ersten gemeinsam genutzten physischen Sidelink-Kanals, PSSCH, auf mindestens einem ersten verschachtelten Ressourcenblock, IRB (S210);
Bestimmen mindestens eines zweiten IRB in einem Übertragungsressourcensatz eines Physischen Sidelink-Rückkopplungskanals, PSFCH, der in einem ersten Schlitz enthalten ist, der PSFCH-Übertragungsressourcen umfasst (S220), wobei der erste Schlitz gemäß einem zweiten Schlitz bestimmt wird, in dem sich der erste PSSCH befindet, der mindestens eine zweite IRB gemäß dem mindestens einen ersten IRB bestimmt wird und sich eine Übertragungsressource eines ersten PSFCH, der dem ersten PSSCH entspricht, in dem mindestens einen zweiten IRB befindet; und
Übertragen, an die zweite Endgerätevorrichtung, des ersten PSFCH, der dem ersten PSSCH entspricht, in dem mindestens einen zweiten IRB,
wobei das Verfahren ferner Folgendes umfasst:
Bestimmen, in dem PSFCH-Übertragungsressourcensatz, eines ersten Übertragungsressourcenteilsatzes, der zum Übertragen des ersten PSFCH verfügbar ist, wobei der erste Übertragungsressourcenteilsatz Nₜₒₜₐₗ PSFCH-Übertragungsressourcen umfasst, wobei die Nₜₒₜₐₗ PSFCH-Übertragungsressourcen basierend auf einer ersten Anzahl und einer zweiten Anzahl bestimmt werden, wobei die erste Anzahl basierend auf der Anzahl von Codebereichsressourcen bestimmt wird, die in einem ersten Codebereichsressourcensatz enthalten sind, und die zweite Anzahl die Anzahl von IRBs ist, die in dem mindestens einen zweiten IRB enthalten sind, die gleich der Anzahl von IRBs ist, die in dem ersten Übertragungsressourcenteilsatz enthalten sind; und
Bestimmen eines Index der Übertragungsressource des ersten PSFCH in dem ersten Übertragungsressourcenteilsatz gemäß der folgenden Formel: $S = \left({P}_{ID}+{M}_{ID}\right) mod {N}_{total} ;$
wobei S den Index der Übertragungsressource des ersten PSFCH repräsentiert, P_{ID} eine Identität der zweiten Endgerätevorrichtung repräsentiert, M_{ID} eine Identität der ersten Endgerätevorrichtung repräsentiert und mod eine Modulo-Operation repräsentiert.

2. Verfahren nach Anspruch 1, wobei die PSFCH-Übertragungsressourcen in dem ersten Übertragungsressourcenteilsatz zuerst in einer Reihenfolge des Frequenzbereichs indiziert werden und zweitens in einer Reihenfolge des Codebereichs indiziert werden.

3. Verfahren nach einem der Ansprüche 1 bis 2, das ferner Folgendes umfasst:
Bestimmen des mindestens einen zweiten IRB in dem PSFCH-Übertragungsressourcensatz basierend auf IRB-Informationen des mindestens einen ersten IRB.

4. Verfahren nach Anspruch 3, wobei die IRB-Informationen des mindestens einen ersten IRB mindestens eines von Folgendem umfassen:
Indexinformationen des ersten des mindestens einen ersten IRB; oder
Indexinformationen aller des mindestens einen ersten IRB.

5. Verfahren nach Anspruch 3 oder 4, wobei die IRB-Informationen des mindestens einen ersten IRB eine Anzahl von IRBs in dem mindestens einen ersten IRB umfassen.

6. Verfahren nach Anspruch 1, wobei die Identität der ersten Endgerätevorrichtung basierend auf einer Mitgliedsidentität der ersten Endgerätevorrichtung innerhalb einer Kommunikationsgruppe bestimmt wird oder die Identität des ersten Endgerätevorrichtung 0 ist.

7. Verfahren nach einem der Ansprüche 1 bis 6, wobei die Identität der zweiten Endgerätevorrichtung gemäß Quellenidentitätsinformationen bestimmt wird, die in Sidelink-Steuerinformationen, SCI, geführt werden, die dem ersten PSSCH entsprechen.

8. Verfahren nach Anspruch 1, wobei ein IRB, der in einem PSSCH-Ressourcenpool enthalten ist, eine "One-to-many"-Entsprechung mit IRBs in dem ersten Schlitz aufweist, sodass die Anzahl von IRBs in dem ersten Schlitz größer als die Anzahl von IRBs in dem PSSCH-Ressourcenpool ist, und die IRB-Ressourcen des ersten PSFCH, die dem ersten PSSCH in dem ersten Schlitz entsprechen, gemäß Informationen über den Schlitz, in dem sich der erste PSSCH befindet, und IRB-Informationen des mindestens einen ersten IRB bestimmt werden.

9. Drahtloskommunikationsverfahren, ausgeführt durch eine zweite Endgerätevorrichtung, wobei das Verfahren Folgendes umfasst:
Übertragen, an eine erste Endgerätevorrichtung, eines ersten gemeinsam genutzten physischen Sidelink-Kanals, PSSCH, auf mindestens einem ersten verschachtelten Ressourcenblock, IRB (S310);
Bestimmen mindestens eines zweiten IRB in einem Übertragungsressourcensatz eines Physischen Sidelink-Rückkopplungskanals, PSFCH, der in einem ersten Schlitz enthalten ist, der PSFCH-Übertragungsressourcen umfasst (S320), wobei der erste Schlitz gemäß einem zweiten Schlitz bestimmt wird, in dem sich der erste PSSCH befindet, der mindestens eine zweite IRB gemäß dem mindestens einen ersten IRB bestimmt wird und sich eine Übertragungsressource eines ersten PSFCH, der dem ersten PSSCH entspricht, in dem mindestens einen zweiten IRB befindet; und
Empfangen, von der ersten Endgerätevorrichtung, des ersten PSFCH, der dem ersten PSSCH entspricht, in dem mindestens einen zweiten IRB,
wobei das Verfahren ferner Folgendes umfasst:
Bestimmen, in dem PSFCH-Übertragungsressourcensatz, eines ersten Übertragungsressourcenteilsatzes, der zum Übertragen des ersten PSFCH verfügbar ist, wobei der erste Übertragungsressourcenteilsatz Nₜₒₜₐₗ PSFCH-Übertragungsressourcen umfasst, wobei die Nₜₒₜₐₗ PSFCH-Übertragungsressourcen basierend auf einer ersten Anzahl und einer zweiten Anzahl bestimmt werden, wobei die erste Anzahl basierend auf der Anzahl von Codebereichsressourcen bestimmt wird, die in einem ersten Codebereichsressourcensatz enthalten sind, und die zweite Anzahl die Anzahl von IRBs ist, die in dem mindestens einen zweiten IRB enthalten sind, die gleich der Anzahl von IRBs ist, die in dem ersten Übertragungsressourcenteilsatz enthalten sind; und
Bestimmen eines Index der Übertragungsressource des ersten PSFCH in dem ersten Übertragungsressourcenteilsatz gemäß der folgenden Formel: $S = \left({P}_{ID}+{M}_{ID}\right) mod {N}_{total} ;$
wobei S den Index der Übertragungsressource des ersten PSFCH repräsentiert, P_{ID} eine Identität der zweiten Endgerätevorrichtung repräsentiert, M_{ID} eine Identität der ersten Endgerätevorrichtung repräsentiert und mod eine Modulo-Operation repräsentiert.

10. Verfahren nach Anspruch 9, wobei die PSFCH-Übertragungsressourcen in dem ersten Übertragungsressourcenteilsatz zuerst in einer Reihenfolge des Frequenzbereichs indiziert werden und zweitens in einer Reihenfolge des Codebereichs indiziert werden.

11. Verfahren nach einem der Ansprüche 9 bis 10, das ferner Folgendes umfasst:
Bestimmen des mindestens einen zweiten IRB in dem PSFCH-Übertragungsressourcensatz basierend auf IRB-Informationen des mindestens einen ersten IRB.

12. Verfahren nach Anspruch 11, wobei die IRB-Informationen des mindestens einen ersten IRB eine Anzahl von IRBs in dem mindestens einen ersten IRB umfassen.

13. Verfahren nach Anspruch 9, wobei ein IRB, der in einem PSSCH-Ressourcenpool enthalten ist, eine "One-to-many"-Entsprechung mit IRBs in dem ersten Schlitz aufweist, sodass die Anzahl von IRBs in dem ersten Schlitz größer als die Anzahl von IRBs in dem PSSCH-Ressourcenpool ist, und die IRB-Ressourcen des ersten PSFCH, die dem ersten PSSCH in dem ersten Schlitz entsprechen, gemäß Informationen über den Schlitz, in dem sich der erste PSSCH befindet, und IRB-Informationen des mindestens einen ersten IRB bestimmt werden.

14. Erste Endgerätevorrichtung, das dazu ausgelegt ist, das Verfahren nach einem der Ansprüche 1 bis 8 auszuführen.

15. Zweite Endgerätevorrichtung, das dazu ausgelegt ist, das Verfahren nach einem der Ansprüche 9 bis 13 auszuführen.

## Revendications

1. Procédé de communication sans-fil exécuté par un premier dispositif terminal, le procédé comprenant les étapes suivantes :
recevoir, en provenance d'un deuxième dispositif terminal, un premier canal physique partagé de liaison latérale, PSSCH, sur au moins un premier bloc de ressources entrelacé, IRB (S210) ;
déterminer au moins un deuxième IRB dans un ensemble de ressources de transmission de canal physique de rétroaction de liaison latérale, PSFCH, compris dans un premier créneau qui comprend des ressources de transmission PSFCH (S220), où le premier créneau est déterminé en fonction d'un deuxième créneau dans lequel se trouve le premier PSSCH, l'au moins un deuxième IRB étant déterminé en fonction de l'au moins un premier IRB, et une ressource de transmission d'un premier PSFCH correspondant au premier PSSCH est située dans l'au moins un deuxième IRB ; et
transmettre, au deuxième dispositif terminal, le premier PSFCH correspondant au premier PSSCH sur l'au moins un deuxième IRB,
le procédé comprenant en outre les étapes suivantes :
déterminer, dans l'ensemble de ressources de transmission PSFCH, un premier sous-ensemble de ressources de transmission disponible pour transmettre le premier PSFCH, le premier sous-ensemble de ressources de transmission comprenant Nₜₒₜₐₗ ressources de transmission PSFCH, les Nₜₒₜₐₗ ressources de transmission PSFCH étant déterminées sur la base d'un premier nombre et d'un deuxième nombre, le premier nombre étant déterminé sur la base du nombre de ressources de domaine de code comprises dans un premier ensemble de ressources de domaine de code, et le deuxième nombre est le nombre d'IRB compris dans l'au moins un deuxième IRB qui est égal au nombre d'IRB inclus dans le premier sous-ensemble de ressources de transmission ; et
déterminer un indice de la ressource de transmission du premier PSFCH dans le premier sous-ensemble de ressources de transmission selon la formule suivante : $S = \left({P}_{ID}+{M}_{ID}\right) mod {N}_{total} ;$
où S représente l'indice de la ressource de transmission du premier PSFCH, P_{ID} représente une identité du deuxième dispositif terminal, M_{ID} représente une identité du premier dispositif terminal, et mod représente une opération modulo.

2. Procédé selon la revendication 1, dans lequel les ressources de transmission PSFCH dans le premier sous-ensemble de ressources de transmission sont indexées en premier suivant un ordre de domaine de fréquence et en deuxième suivant un ordre de domaine de code.

3. Procédé selon l'une quelconque des revendications 1 et 2, comprenant en outre l'étape suivante :
déterminer l'au moins un deuxième IRB dans l'ensemble de ressources de transmission PSFCH sur la base des informations IRB de l'au moins un premier IRB.

4. Procédé selon la revendication 3, dans lequel les informations IRB de l'au moins un premier IRB comprennent au moins l'une des informations suivantes :
des informations du premier de l'au moins un premier IRB ; ou
des informations de tous les IRB de l'au moins un premier IRB.

5. Procédé selon la revendication 3 ou la revendication 4, dans lequel les informations IRB de l'au moins un premier IRB comprennent un nombre d'IRB dans l'au moins un premier IRB.

6. Procédé selon la revendication 1, dans lequel l'identité du premier dispositif terminal est déterminée sur la base d'une identité de membre du premier dispositif terminal dans un groupe de communication, ou l'identité du premier dispositif terminal est 0.

7. Procédé selon l'une quelconque des revendications 1 à 6, dans lequel l'identité du deuxième dispositif terminal est déterminée conformément à des informations d'identité de source transportées dans des informations de commande de liaison latérale, SCI, correspondant au premier PSSCH.

8. Procédé selon la revendication 1, dans lequel un IRB inclus dans un pool de ressources PSSCH a une correspondance un à plusieurs avec des IRB dans le premier créneau, de sorte que le nombre d'IRB dans le premier créneau est supérieur au nombre d'IRB dans le pool de ressources PSSCH, et les ressources IRB du premier PSFCH correspondant au premier PSSCH dans le premier créneau sont déterminées en fonction des informations concernant le créneau dans lequel se trouve le premier PSSCH et des informations IRB du premier IRB.

9. Procédé de communication sans-fil exécuté par un deuxième dispositif terminal, le procédé comprenant les étapes suivantes :
transmettre, à un premier dispositif terminal, un premier canal physique partagé de liaison latérale, PSSCH, sur au moins un premier bloc de ressources entrelacé, IRB (S310) ;
déterminer au moins un deuxième IRB dans un ensemble de ressources de transmission de canal physique de rétroaction de liaison latérale, PSFCH, compris dans un premier créneau qui comprend des ressources de transmission PSFCH (S320), où le premier créneau est déterminé en fonction d'un deuxième créneau dans lequel se trouve le premier PSSCH, l'au moins un deuxième IRB étant déterminé en fonction de l'au moins un premier IRB,
et une ressource de transmission d'un premier PSFCH correspondant au premier PSSCH est située dans l'au moins un deuxième IRB ; et
recevoir, depuis le premier dispositif terminal, le premier PSFCH correspondant au premier PSSCH sur l'au moins un deuxième IRB,
le procédé comprenant en outre les étapes suivantes :
déterminer, dans l'ensemble de ressources de transmission PSFCH, un premier sous-ensemble de ressources de transmission disponible pour transmettre le premier PSFCH, le premier sous-ensemble de ressources de transmission comprenant Nₜₒₜₐₗ ressources de transmission PSFCH, les Nₜₒₜₐₗ ressources de transmission PSFCH étant déterminées sur la base d'un premier nombre et d'un deuxième nombre, le premier nombre étant déterminé sur la base du nombre de ressources de domaine de code comprises dans un premier ensemble de ressources de domaine de code, et le deuxième nombre est le nombre d'IRB compris dans l'au moins un deuxième IRB qui est égal au nombre d'IRB inclus dans le premier sous-ensemble de ressources de transmission ; et
déterminer un indice de la ressource de transmission du premier PSFCH dans le premier sous-ensemble de ressources de transmission selon la formule suivante : $S = \left({P}_{ID}+{M}_{ID}\right) mod {N}_{total} ;$
où S représente l'indice de la ressource de transmission du premier PSFCH, P_{ID} représente une identité du deuxième dispositif terminal, M_{ID} représente une identité du premier dispositif terminal, et mod représente une opération modulo.

10. Procédé selon la revendication 9, dans lequel les ressources de transmission PSFCH dans le premier sous-ensemble de ressources de transmission sont indexées en premier suivant un ordre de domaine de fréquence et en deuxième suivant un ordre de domaine de code.

11. Procédé selon l'une quelconque des revendications 9 et 10, comprenant en outre l'étape suivante :
déterminer l'au moins un deuxième IRB dans l'ensemble de ressources de transmission PSFCH sur la base des informations IRB de l'au moins un premier IRB.

12. Procédé selon la revendication revendication 11, dans lequel les informations IRB de l'au moins un premier IRB comprennent un nombre d'IRB dans l'au moins un premier IRB.

13. Procédé selon la revendication 9, dans lequel un IRB inclus dans un pool de ressources PSSCH a une correspondance un à plusieurs avec des IRB dans le premier créneau, de sorte que le nombre d'IRB dans le premier créneau est supérieur au nombre d'IRB dans le pool de ressources PSSCH, et les ressources IRB du premier PSFCH correspondant au premier PSSCH dans le premier créneau sont déterminées en fonction des informations concernant le créneau dans lequel se trouve le premier PSSCH et des informations IRB du premier IRB.

14. Premier dispositif terminal, configuré pour exécuter le procédé selon l'une quelconque des revendications 1 à 8.

15. Deuxième dispositif terminal, configuré pour exécuter le procédé selon l'une quelconque des revendications 9 à 13.
